# EUROPEAN PATENT APPLICATION

(11) **EP 1 816 564 A1**
(43) Date of publication of application: **08.08.2007**
(21) Application number: 04792280.2
(22) Date of filing: 12.10.2004
(51) Int. Cl.: G06F 11/20

(54) **RESOURCE EXCHANGE PROCESSING PROGRAM AND RESOURCE EXCHANGE PROCESSING METHOD**

(71) Applicant: Fujitsu Ltd., Kawasaki-shi, Kanagawa 211-8588 (JP)
(72) Inventor: HAMANAKA, Seishiro FUJITSU LIMITED,, Kawasaki-shi, Kanagawa 211-8588 (JP); HIBI, Yoshinobu FUJITSU LIMITED,, Kawasaki-shi, Kanagawa 211-8588 (JP); NAITOU, Masayuki FUJITSU LIMITED,, Kawasaki-shi, Kanagawa 211-8588 (JP); YOSHIKAWA, Shigehiro FUJITSU LIMITED,, Kawasaki-shi, Kanagawa 211-8588 (JP); IYODA, Satoshi FUJITSU LIMITED,, Kawasaki-shi, Kanagawa 211-8588 (JP)
(74) Representative: Sunderland, James Harry
(86) International application number: PCT/JP2004/015036
(87) International publication number: WO 2006/040811

(57) **Abstract**

A software RM (23) and a network RM (24) read out information from a system resource DB (26), and perform a software install or a network setting corresponding to a server group to which a server is to be added on a server in a pool based on read information. When a server included in the server group is failed or when a load on the server group increases, the software RM (23) and the network RM (24) adds the server on which the software install or the network setting is performed to the server group.

## Description

### TECHNICAL FIELD

The present invention relates to a resource-change processing program and a resource-change processing method for adding/changing a backup server in a plurality of server groups configured with a plurality of servers, and more particularly, to a resource-change processing program and a resource-change processing method capable of recovering a server group at low cost in an expedited manner.

### BACKGROUND ART

Conventionally, an information processing system that performs various tasks is configured with a plurality of servers, in which a backup server is prepared and to be added to the information processing system so that when a failure occurs in a server included in the information processing system or a load on the server increases, a failed server is replaced with the backup server or loads on the servers are distributed to the backup server.

However, upon adding a new server, it is necessary to install software for performing various processings or to perform various environmental settings to the server to be added. Therefore, there is a problem that it takes time before a new server is added.

Furthermore, because an installation of the software or various environmental settings are manually performed, if there is a mistake in operation, a problem occurs that the installation of the software or the various environmental settings are not performed properly and the server added does not work.

In response to the above, Patent document 1 discloses a technology for replacing an operating server with a backup server in an expedited manner when abnormality occurs in the operating server, by dynamically copying a task class of the operating server to a task class of the backup server to continuously keep the task classes of the servers uniform.

Patent Document 1: Japanese Patent Application Laid-open No. H11-85555

### DISCLOSURE OF INVENTION

### PROBLEM TO BE SOLVED BY THE INVENTION

With the conventional technology, however, it is necessary to continuously operate the backup server and to keep a state of the backup server same as that of the operating server even when the operating server is not failed. As a result, there is a problem that extra costs are required.

According to the above, there is a need that the backup server does not continuously operate and can be added or used as a replacement in an expedited manner only when a failure occurs in the operating server or a load on the operating server increases.

The present invention has been achieved to overcome the above problems, and it is an object of the present invention to provide a resource-change processing program and a resource-change processing method capable of adding the backup server or using the backup server as a replacement at low cost in an expedited manner, when a failure occurs in the operating server or a load on the operating server increases.

### MEANS FOR SOLVING PROBLEM

To solve the above problems and achieve the object, according to an aspect of the present invention, a resource-change processing program for adding/changing a backup server in a plurality of server groups configured with a plurality of servers causes a computer to execute setting processing including acquiring setting information, which is information on a setting of a software, a network, and a storage, for a server group, and performing a setting corresponding to the server group on the backup server in advance, based on the setting information; and adding, when an abnormality occurs in the server group or when a load on the server group increases, the backup server for which the setting is performed at the setting processing to the server group.

Furthermore, according to an aspect of the present invention, a resource-change processing method of adding/changing a backup server in a plurality of server groups configured with a plurality of servers includes setting processing including acquiring setting information, which is information on a setting of a software, a network, and a storage, for a server group, and performing a setting corresponding to the server group on the backup server in advance, based on the setting information; and adding, when an abnormality occurs in the server group or when a load on the server group increases, the backup server for which the setting is performed at the setting processing to the server group.

### EFFECT OF THE INVENTION

According to the present invention, a plurality of server groups is configured with a plurality of servers, setting information as information on settings of software, network, and storage for the server group is acquired, settings corresponding to the server group is performed in advance to a backup server based on the setting information, and the backup server to which the setting has been performed is added to the server group when abnormality occurs in the server group or load on the server group increases. Therefore, it is possible to restore the server group in an expedited manner.

### BRIEF DESCRIPTION OF DRAWINGS

[Fig. 1] Fig. 1 is a diagram (1) for explaining a concept of a resource-change processing according to an embodiment of the present invention;
[Fig. 2] Fig. 2 is a diagram (2) for explaining a concept of the resource-change processing according to the embodiment;
[Fig. 3] Fig. 3 is a diagram of a functional configuration of the resource-change processing according to the embodiment;
[Fig. 4] Fig. 4 is a flowchart of a processing procedure of the resource-change processing according to the embodiment;
[Fig. 5] Fig. 5 is a diagram of an example of site data 300 registered as information on operation management servers;
[Fig. 6] Fig. 6 is a diagram of an example of domain management server data 310 registered as information on domain management servers 50 and 60;
[Fig. 7] Fig. 7 is a diagram of an example of management subnet data 320 registered as information on subnets to be managed;
[Fig. 8] Fig. 8 is a diagram of an example of middleware cooperation IF data 330 containing commands for performing various processings in cooperation with middleware;
[Fig. 9] Fig. 9 is a diagram of an example of server domain data 340 stored as information on server domains to which servers 110a to 110c, 140a to 140c, and 150a to 150c belong;
[Fig. 10] Fig. 10 is a diagram of an example of pool group data 350 stored as information on pool groups;
[Fig. 11] Fig. 11 is a diagram of an example of storage domain data 360 stored as information on storage domains;
[Fig. 12] Fig. 12 is a schematic diagram for explaining a network domain and network sub domains;
[Fig. 13] Fig. 13 is a diagram of an example of network sub domain data 470 stored as information on network sub domains;
[Fig. 14] Fig. 14 is a diagram of an example of network domain data 480 stored as information on network domains;
[Fig. 15] Fig. 15 is a diagram of an example of load distributing apparatus data 490 stored as information on load distributing apparatuses;
[Fig. 16] Fig. 16 is a schematic diagram for explaining a configuration of network sub groups;
[Fig. 17] Fig. 17 is a diagram of an example of network sub group data 660 stored as information on network sub groups;
[Fig. 18] Fig. 18 is a diagram of an example of inter-server-domain link data 670 stored as information on correspondence relations between server domains;
[Fig. 19] Fig. 19 is a diagram of an example of inter-server/storage-domain link data 680 stored as information on correspondence relations between server domains;
[Fig. 20] Fig. 20 is a diagram of an example of network boot server data 690 stored as information on servers to be network booted;
[Fig. 21] Fig. 21 is a diagram of an example of management target server data 690 stored as information on servers to be managed;
[Fig. 22] Fig. 22 is a diagram of an example of provisioning configuration data 710 stored as information on groups to which servers belong;
[Fig. 23] Fig. 23 is a diagram of an example of wire connections between servers and storage devices having uniform connections;
[Fig. 24] Fig. 24 is a diagram for explaining a processing of checking a connection uniformity based on WWPN;
[Fig. 25] Fig. 25 is a diagram of an example of storage template data 800 stored as information on storage templates;
[Fig. 26] Fig. 26 is a diagram of an example of server group data 810 stored as information on server groups;
[Fig. 27] Fig. 27 is a server/storage group link data 820 stored as information on storage groups corresponding to server groups;
[Fig. 28] Fig. 28 is inter-server-group link data 830 stored as information on correspondence relations between server groups;
[Fig. 29] Fig. 29 is a diagram of an example of load distribution group data 840 stored as information on groups of load distributing apparatuses;
[Fig. 30] Fig. 30 is a diagram of an example of network group data 850 stored as information on network groups;
[Fig. 31] Fig. 31 is a flowchart of a processing procedure of a setting processing of setting logical volumes to an RAID device;
[Fig. 32] Fig. 32 is a diagram of an example of a setting screen for setting logical volume;
[Fig. 33] Fig. 33 is a diagram of an example of RAID-level setting data 940 stored as information on settings of RAID-levels;
[Fig. 34] Fig. 34 is a diagram of an example of RAID device data 950 stored as information on RAID devices;
[Fig. 35] Fig. 35 is a diagram of an example of provisioning configuration data 960 containing storage subgroups;
[Fig. 36] Fig. 36 is a flowchart of a processing procedure of a processing of setting a logical volume, in which a server recognizes the logical volume;
[Fig. 37] Fig. 37 is a schematic diagram for explaining a processing of setting a logical volume configured in a RAID device;
[Fig. 38] Fig. 38 is a diagram of an example of affinity group data 1010 stored as information on affinity groups;
[Fig. 39] Fig. 39 is a diagram of an example of multipath configuration data 1020 stored as information on multipath configurations;
[Fig. 40] Fig. 40 is a diagram of an example of mirror volume configuration data 1030 stored as information on configurations of mirror volumes;
[Fig. 41] Fig. 41 is a diagram of an example of IP address management data 1040 stored as information on IP addresses assigned to servers;
[Fig. 42] Fig. 42 is a diagram of an example of software image management data 1050 stored as information on software images;
[Fig. 43] Fig. 43 is a diagram of an example of software distribution image management data 1060 stored as information on software distribution images;
[Fig. 44] Fig. 44 is a diagram of an example of snapshot management data 1070 stored as information on snapshots;
[Fig. 45] Fig. 45 is a flowchart of a processing procedure of a processing of adding a server to a server group;
[Fig. 46] Fig. 46 is a diagram of an example of distribution management data 1080 stored as information on distribution statuses of software distribution images;
[Fig. 47] Fig. 47 is a flowchart of a processing procedure of a server delete processing of deleting a server from a server group;
[Fig. 48] Fig. 48 is a flowchart of a processing procedure of a processing of previously setting information on software, network, and the like to a server in a pool;
[Fig. 49] Fig. 49 is a flowchart of a detailed processing procedure of a processing of previously setting information on software, network, and the like to a server in a pool;
[Fig. 50] Fig. 50 is a flowchart of a processing procedure of adding server resource when abnormality occurs in a server or load on the server increase;
[Fig. 51] Fig. 51 is a flowchart of a detailed processing procedure of adding server resource when abnormality occurs in a server or load on the server increase;
[Fig. 52] Fig. 52 is a view of an example of a resource layout output screen 1090 on which layouts of resources to be managed are displayed;
[Fig. 53] Fig. 53 is a view of an example of a resource layout setting screen 1140 to which settings on layouts of resources are input by a user;
[Fig. 54] Fig. 54 is a view of an example of a server group list screen 1150 on which a list of server groups that belong to server domains are displayed;
[Fig. 55] Fig. 55 is a view of an example of a server list screen 1160 on which a list of servers that belong to server groups are displayed;
[Fig. 56] Fig. 56 is a view of an example of a storage list screen 1170 on which a list of storages that belong to storage groups are displayed;
[Fig. 57] Fig. 57 is a block diagram of a hardware configuration of a computer 1200 used as a site management server 20 shown in Fig. 3;
[Fig. 58] Fig. 58 is a block diagram of a hardware configuration of a computer 1300 used as a domain management server 20 shown in Fig. 3; and
[Fig. 59] Fig. 59 is a block diagram of a hardware configuration of a computer 1400 used as a server 110a shown in Fig. 3.

### EXPLANATIONS OF LETTERS OR NUMERALS

- 1, 2: Task
- 3: Pool
- 4: Web domain
- 4₁ to 4₉: Web server
- 5: AP domain
- 5₁ to 5₆: AP sever
- 6: DB domain
- 6₁ to 6₃: DB server
- 7: Storage domain
- 7₁ to 7₉: Storage
- 10: Operation management client
- 20: Site management server
- 21: System resource manager
- 22: Server RM
- 23: Software RM
- 24: Network RM
- 25: Storage RM
- 26: System resource DB
- 27: AP-management control unit
- 30, 40, 90, 120: FW
- 50, 60: Domain management server
- 51: System resource domain manager
- 52: Server sub RM
- 53: Software sub RM
- 54: Network sub RM
- 55: Domain resource DB
- 70: Internet
- 80: Router
- 100, 130: SLB
- 110a, 110b, 110c: Server
- 111a: Resource manager agent
- 112a: Server RM agent
- 113a: Software RM agent
- 114a: Network RM agent
- 115a: Storage RM agent
- 116a: AP managing unit
- 140a, 140b, 140c: Server
- 150a, 150b, 150c: Server
- 160a, 160b, 160c, 160d: Storage
- 170: SAN
- 180: Edge domain
- 190: Web domain
- 200: AP domain
- 210: DB domain
- 300: Site data
- 310: Domain management server data
- 320: Management subnet data
- 330: Middleware cooperation IF data
- 340: Server domain data
- 350: Pool group data
- 360: Storage domain data
- 370: Web domain
- 380a, 380b, 380c, 380d, 380e: Server
- 390: AP domain
- 400a, 400b, 400c, 400d, 400e: Server
- 410: Web/AP network domain
- 420: Web/back network sub domain
- 430a, 430b: Switch
- 440: AP/front network dub domain
- 450a, 450b: Switch
- 460a, 460b: SLB
- 470: Network sub domain data
- 480: Network domain data
- 490: Load distributing apparatus data
- 510: Web domain
- 520a, 520b, 520c, 520d, 520e: Server
- 530: A_Web server Group
- 540: B_Web server Group
- 550: AP domain
- 560a, 560b, 560c, 560d, 560e: Server
- 570: A_AP
- 580: B_AP
- 590, 610: Switch
- 600a, 600b: SLB
- 620: Network sub group A_Web_Back
- 630: Network sub group B_Web_Back
- 640: Network sub group A_AP_Front
- 650: Network sub group B_AP_Front
- 660: Network sub group data
- 670: Inter-server-domain link data
- 680: Inter-server/storage-domain link data
- 690: Network boot server data
- 700: Management target server data
- 710: Provisioning configuration data
- 720: Server domain
- 730a, 730b, 790a, 790b: Server
- 740: Storage domain
- 750a, 750b: FC switch
- 760a, 760b: RAID device
- 770a, 770b: RAID device WWPN data
- 780a, 780b: FC switch WWPN data
- 790a, 790b: Server WWPN data
- 800: Storage template data
- 810: Server group data
- 820: Server/storage group link data
- 830: Inter-server-group link data
- 840: Load distribution group data
- 850: Network group data
- 860: Necessary condition output screen
- 870a, 870b, 870c: Necessary condition
- 880: Logical-volume-configuration output screen
- 890: RAID device
- 900a, 900b, 900c: Necessary condition
- 910a, 910b, 910c, 910d: Logical volume
- 920a, 920b, 920c, 920d, 920e: Logical volume
- 930a, 930b: RAID group
- 960: Provisioning configuration data
- 970: Server group
- 980: Storage pool
- 990: Storage group
- 1000: Intra-server storage configuration
- 1010: Affinity group data
- 1020: Multipath configuration data
- 1030: Mirror volume configuration data
- 1040: IP address management data
- 1050: Software image management data
- 1060: Software distribution image management data
- 1070: Snapshot management data
- 1080: Distribution management data
- 1090: Resource layout output screen
- 1100: Web domain
- 1110: AP domain
- 1120: DB domain
- 1130: Storage domain
- 1140: Resource layout setting screen
- 1150: Server group list screen
- 1160: Server list screen
- 1170: Storage list screen

### BEST MODE(S) FOR CARRYING OUT THE INVENTION

Exemplary embodiments of a resource-change processing program and a resource-change processing method according to the present invention are explained in detail below with reference to the accompanying drawings. The present invention is not limited to the embodiments.

### Embodiment

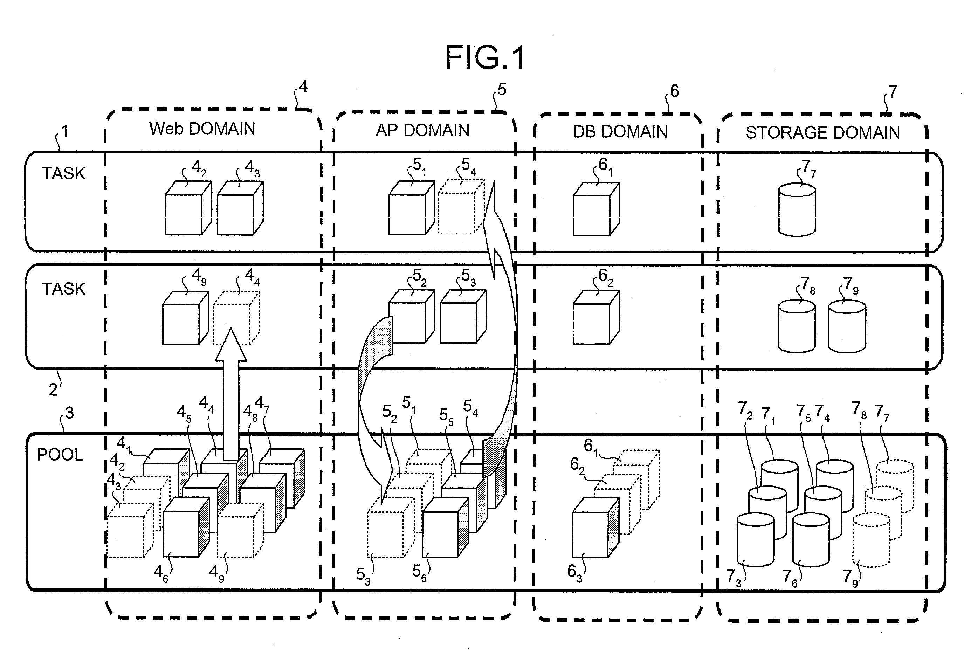

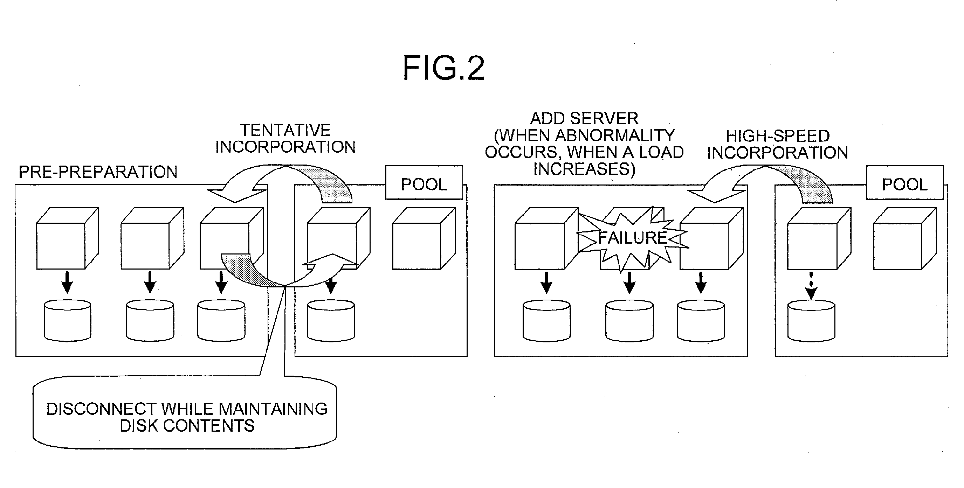

A concept of a resource-change processing according to the present invention is explained below. Figs. 1 and 2 are diagrams for explaining the concept of the resource-change processing according to the present invention. In Fig. 1, a case is depicted in which information processing apparatuses such as web servers 4₁ to 4₉, AP (Application) servers 5₁ to 5₆, DB (Database) servers 6₁ to 6₃, and storages 7₁ to 7₉ are used for each of tasks 1 and 2.

The web servers 4₁ to 4₉ are servers that provide contents to be browsed by web browsers to client terminals via the Internet. The AP servers 5₁ to 5₆ are servers that take over execution of information processes requested by the web servers 4₁ to 4₉ that have received an information processing request from a user.

The DB servers 6₁ to 6₃ are servers that manage accesses to database upon receiving requests for accessing the database from the AP servers 5₁ to 5₆. The storages 7₁ to 7₉ are storage devices to be connected via a SAN (Storage Area Network) to the web servers 4₁ to 4₉, the AP servers 5₁ to 5₆, and the DB servers 6₁ to 6₃.

With operation management according to the present invention, a resource group that contains servers or storages having a uniform physical wire connection to other devices is managed as a domain in a LAN (local area network) or a SAN.

For example, in the case shown in Fig. 1, server groups used for the tasks 1 and 2 are managed as a web domain 4, an AP domain 5, and a DB domain 6, while a storage group used for the tasks 1 and 2 is managed as a storage domain 7.

In this case, the web servers 4₁ to 4₉ that belong to the web domain 4 have uniform connections to other devices, the AP servers 5₁ to 5₆ that belong to the AP domain 5 have uniform connections to other devices, the DB servers 6₁ to 6₃ that belong to the DB domain 6 have uniform connections to other devices, and the storages 7₁ to 7₉ that belong to the storage domain 7 have uniform connections to other devices.

With the operation management, unused ones of the web servers 4₁ to 4₉, the AP servers 5₁ to 5₆, the DB servers 6₁ to 6₃, and the storages 7₁ to 7₉ are registered to a pool 3 for each domain. The web servers 4₁ to 4₉, the AP servers 5₁ to 5₆, the DB servers 6₁ to 6₃, and the storages 7₁ to 7₉ are assigned to each of the tasks 1 and 2 as appropriate.

For example, in the example of Fig. 1, the web servers 4₂ and 4₃, the AP server 5₁, the DB server 6₁, and the storage 7₇ are assigned to the task 1, while the web server 4₉, the AP servers 5₂ and 5₃, the DB server 6₂, and the storages 7₈ and 7₉ are assigned to the task 2.

If load on the web servers 42, 43, 49, the AP servers 51, 52, 53, and the DB servers 61, 62 assigned to the tasks 1 and 2 increases, or if storage capacity of the storages 77 to 79 is not enough, the web servers 41, 44 to 48, the AP servers 54 to 56, the DB server 63, and the storages 71 to 76 registered to the pool 3 are added as servers available for the task.

Specifically, by introducing a software required for the web servers 41, 44 to 48, the AP servers 54 to 56, and the DB server 63 registered to the pool 3 and automatically executing setting of the network and the like, the web servers 41, 44 to 48, the AP servers 54 to 56, and the DB server 63 are added as the servers available for the task.

To add the storages 71 to 76, by automatically executing setting of logical volumes and setting of the network to the storages 71 to 76, the storages 71 to 76 are added as the storages 71 to 76 available for the task.

For example, in Fig. 1, the web server 44 that was registered to the pool 3 is added to the web domain 4 of the task 2.

According to the embodiment, as shown in Fig. 2, when a server is added as a server available for the task, a server registered on the pool is once incorporated into a corresponding server group in advance, settings for required software and networks are performed, and thereafter, the server is returned to the pool. When a load on the server increases or a server is in failure, the server registered on the pool is incorporated, so that it is possible to counteract server failures or load increases.

Moreover, according to the resource allocation management method, if the web servers 42, 43, 49, the AP servers 51 to 53, the DB servers 61, 62, or the storages 77 to 79 used for the tasks 1 and 2 are not used for a long time, the web servers 42, 43, 49, the AP servers 51 to 53, the DB servers 61, 62, and the storages 77 to 79 are excluded from the servers available for the task and registered to the pool 3.

The web servers 42, 43, 49, the AP servers 51 to 53, the DB servers 61, 62, and the storages 77 to 79 registered to the pool 3 are to be used if the load on the web servers 42, 43, 49, the AP servers 51 to 53, and the DB servers 61, 62, used for other tasks 1 and 2 increases or if the storage capacity of the storages 77 to 79 is not enough.

Specifically, by deleting the software introduced to the web servers 42, 43, 49, the AP servers 51 to 53, and the DB servers 61, 62 and automatically changing setting of the network and the like, the web servers 42, 43, 49, the AP servers 51 to 53, and the DB servers 61, 62 are excluded from the servers available for the tasks 1 and 2 and registered to the pool 3.

Moreover, to exclude the storages 77 to 79 from the storages available for the tasks 1 and 2 and to register them to the pool 3, by automatically executing setting of the network to the storages 77 to 79, the storages 77 to 79 can be excluded from the storages available for the tasks 1 and 2 and registered to the pool 3.

For example, in Fig. 1, the AP server 52 that was registered to the pool 3 is excluded from the servers available for the task in the AP domain 5 of the task 2, and it is registered to the pool 3. The server 54 registered to the pool 3 is reused in such a case that the load on the server 51 used for the task 1 increases, and it is added to the task 1.

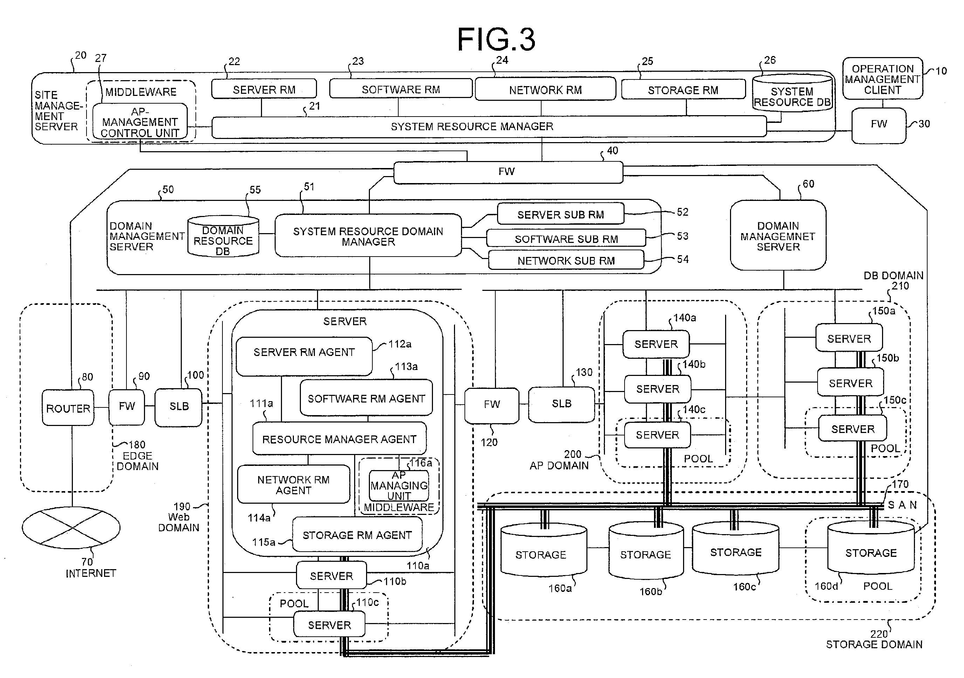

A functional configuration of a resource-change processing system according to the embodiment is explained below. Fig. 3 is a diagram of the functional configuration of the resource-change processing system according to the embodiment.

As shown in Fig. 3, in the resource-change processing system, an operation management client 10 is connected to a site management server 20 via an FW (firewall) 30 over a network. The site management server 20 is connected over the network to domain management servers 50 and 60 via an FW 40.

Furthermore, the site management server 20 is connected over the network to a router 80 that belongs to an edge domain 180 via the FW 40. The site management server 20 is also connected over the network to storages 160a to 160c that belong to a storage domain 220, and to a storage 160d that is pooled via the FW 40.

The domain management server 50 is connected over the network to an SLB (server load balancer) 100 and to servers 110a to 110c that belong to a web domain 190.

Furthermore, the domain management server 60 is connected over the network to an FW 120, an SLB 130, servers 140a to 140c that belong to an AP domain 200, servers 150a to 150c that belong to a DB domain 210.

The storages 160a to 160c that belong to the storage domain 220, and the storage 160d that is pooled are also connected via a SAN 170 to the servers 110a to 110c that belong to the web domain 190, the servers 140a to 140c that belong to the AP domain 200, and the servers 150a to 150c that belong to the DB domain 210.

In this case, the operation management client 10 is a client device that receives various settings related to the resource-change processing from the user, sends the setting information to the site management server 20, receives various output results from the site management server 20, and displays the results on a monitor or the like.

The site management server 20 is a server that performs the resource-change processing as explained in connection with Figs. 1 and 2 in cooperation with the domain management servers 50 and 60. The site management server 20 includes a system resource manager 21, a server RM (resource manager) 22, a software RM (resource manager) 23, a network RM (resource manager) 24, a storage RM (resource manager) 25, a system resource DB (database) 26, and an AP (application) management control unit 27.

The system resource manager 21 is a managing unit that receives various setting information related to the resource-change processing from the operation management client 10, and operates resources in cooperation with the server RM 22, the software RM 23, the network RM 24, and the storage RM 25. In addition, the system resource manager 21 performs data reception and data transmission between the domain management servers 50 and 60.

The server RM 22 is a managing unit that performs a boot and a shutdown of each of the servers 110a to 110c, 140a to 140c, and 150a to 150c, a collection of information about hardware, a setting, and the like. The server RM 22 performs the above processes in cooperation with a server sub RM (resource manager) 52 of the domain management server 50, and a server RM agent 112a of the server 110a.

The software RM 23 is a managing unit that performs software installation, setting, collection of information about the software, and the like for each of the servers 110a to 110c, 140a to 140c, and 150a to 150c. The software RM 23 performs the above processes in cooperation with a software sub RM (resources manager) 53 of the domain management server 50, and a software RM agent 113a of the server 110a.

The network RM 24 is a managing unit that performs information collection, setting, and the like related to the network. The network RM 24 performs the above processes in cooperation with a network sub RM (resource manager) 54 of the domain management server 50, and a network RM agent 14a of the server 110a.

The storage RM 25 is a managing unit that performs information collection, setting, and the like related to the storages 160a to 160c that belong to the storage domain 220, and relate to the storage 160d that is pooled. The storage RM 25 manages the storages 160a to 160c and the storage 160d pooled without involving the domain management servers 50 and 60.

The system resource DB 26 is a database that contains various resource information managed by the system resource manager 21, the server RM 22, the software RM 23, the network RM 24, and the storage RM 25. Details of stored data are explained later.

The AP-management control unit 27 is a processing unit that controls and manages an AP (application) managing unit 116a. More specifically, the AP-management control unit 27 sends a request for executing process related to an application such as installation and setting to the AP managing unit 116a. Functions of the AP-management control unit 27 are realized by executing middleware installed on the site management server 20.

The domain management servers 50 and 60 are servers that manage resources in a domain or a plurality of domains. The domain management server 50 includes a system resource domain manager 51, the server sub RM 52, the software sub RM 53, the network sub RM 54, and a domain resource DB (database) 55.

The domain management server 60 includes the same function units as the function units of the domain management server 50, and therefore, the function units of the domain management server 60 are not shown in Fig. 3 and explanations thereof are omitted.

The system resource domain manager 51 is a managing unit that performs information collection, setting process, and the like related to resources that belong to each of the domains in cooperation with the server sub RM 52, the software sub RM 53, and the network sub RM 54.

Furthermore, the system resource domain manager 51 performs data reception and data transmission to and from networking equipment such as the site management server 20, an FW 90, and the SLB 100, as well as to and from the servers 110a to 110c to be managed.

The server sub RM 52 is a managing unit that performs boot, shutdown, collection of information about hardware, setting, and the like in cooperation with the server RM 22 and the server RM agent 112a.

The software sub RM 53 is a managing unit that performs software installation, setting, collection of information about software, and the like for each of the servers 110a to 110c in cooperation with the software RM 23 and the software RM agent 113a.

The network sub RM 54 is a managing unit that performs information collection, setting, and the like related to a network in cooperation with the network RM 24 and a network RM agent 114a.

The domain resource DB 55 is a database that stores therein information acquired from the servers 110a to 110c and the system resource DB 26, when the server sub RM 52, the software sub RM 53, or the network sub RM 54 collects various information or specifies settings related to the servers 110a to 110c to be managed. In addition, the domain resource DB 55 stores therein a virtual OS (operating system) used for network boot of the servers 110a to 110c.

The router 80 is networking equipment that performs routing of data packets in data communication via the Internet 70. The FWs 30, 40, 90, and 120 are networking equipments that prevent unauthorized access to each of the servers 110a to 110c, 140a to 140c, and 150a to 150c.

The SLBs 100 and 130 are load balancers that distribute and transfer information-processing requests for the servers 110a to 110c or 140a to 140c to a plurality of the servers 110a to 110c or 140a to 140c. Although switches are also connected in upstream sides and downstream sides of the SLBs 100 and 130, the switches are not shown in Fig. 3.

The servers 110a to 110c, 140a to 140c, and 150a to 150c are servers that perform various information processes. The server 110a includes a resource manager agent 111a, the server RM agent 112a, the software RM agent 113a, the network RM agent 114a, a storage RM agent 115a, and the AP managing unit 116a.

The servers 110b, 140a, 140b, 150a, and 150b include the same function units as those of the server 110a. Therefore, the function units of the servers 110b, 140a, 140b, 150a, and 150b are not shown in Fig. 3, and explanations thereof are omitted.

The servers 110c, 140c, and 150c are pooled servers and do not include the above function units. When the servers 110c, 140c, and 150c are set as servers available for the task, the function units are implemented by installing computer programs for implementing the function units into the servers 110c, 140c, and 150c and executing the computer programs.

The resource manager agent 111a is an agent that receives a request for executing process such as setting and information collection from the domain management server 50 of the system resource domain manager 51 for the server 110a, and performs processes in cooperation with the server RM agent 112a, the software RM agent 113a, the network RM agent 114a, and the storage RM agent 115a.

The server RM agent 112a is an agent that performs a boot and a shutdown of the server 110a, a collection of information about hardware, a setting, and the like. The software RM agent 114b is an agent that performs software installation, setting, and collection of information about software for the server 110a.

The network RM agent 114a is an agent that performs information collection, setting, and the like related to a network connected to the server 110a. The storage RM agent 115a is an agent that performs information collection, setting, and the like related to a storage connected to the server 110a.

The storages 160a to 160c are storages that are used by the servers 110a to 110c that belong to the web domain 190, the servers 140a to 140c that belong to the AP domain 200, and the servers 150a to 150c that belong to the DB domain 210, and are configured with RAID devices. The storage 160d is a pooled storage.

It is allowable to set a VLAN (virtual local area network) as a network that connects between the servers 110a to 110c that belong to the web domain 190, the servers 140a to 140c that belong to the AP domain 200, and the servers 150a to 150a that belong to the DB domain 210.

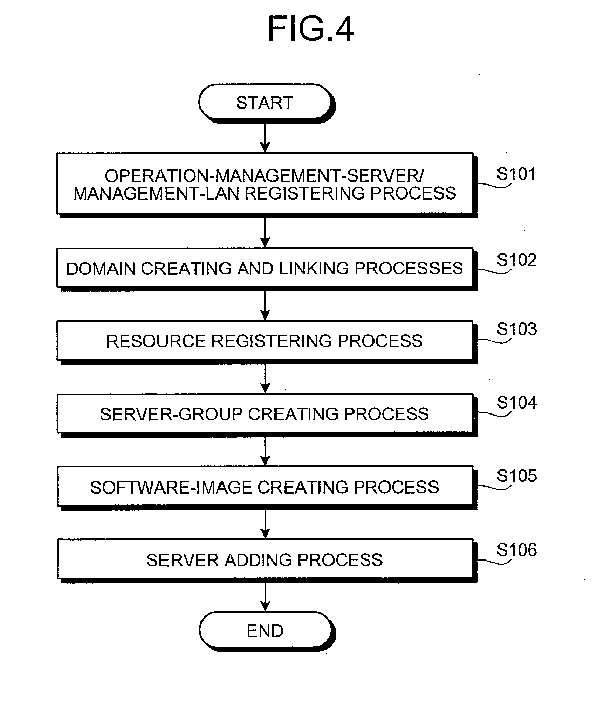

A processing procedure of the resource-change processing according to the embodiment is explained below. Fig. 4 is a flowchart of the processing procedure of the resource-change processing according to the embodiment.

In this case, programs that causes a computer to execute functions of the system resource manager 21, the server RM 22, the software RM 23, the network RM 24, the storage RM 25, and the AP-management control unit 27 are installed in advance to the site management server 20, programs that causes a computer to execute functions of the system resource domain manager 51, the server sub RM 52, the software sub RM 53, and the network sub RM 54 are installed in advance to the domain management servers 50 and 60, and programs that causes a computer to execute functions of the resource manager agent 111a, the server RM agent 112a, the software RM agent 113a, the network RM agent 114a, the storage RM agent 115a, and the AP managing unit 116a are installed in advance to each of the servers 110a, 110b, 140a, 140b, and 150a, 150b.

As shown in Fig. 4, the system resource manager 21 of the site management server 20 performs a registering process of an operation management server and a management-LAN (step S101). The operation management server and the management-LAN are a server and a LAN that are used for managing resources to be managed by the servers 110a to 110c, 140a to 140c, and 150a to 150c and the SAN 170.

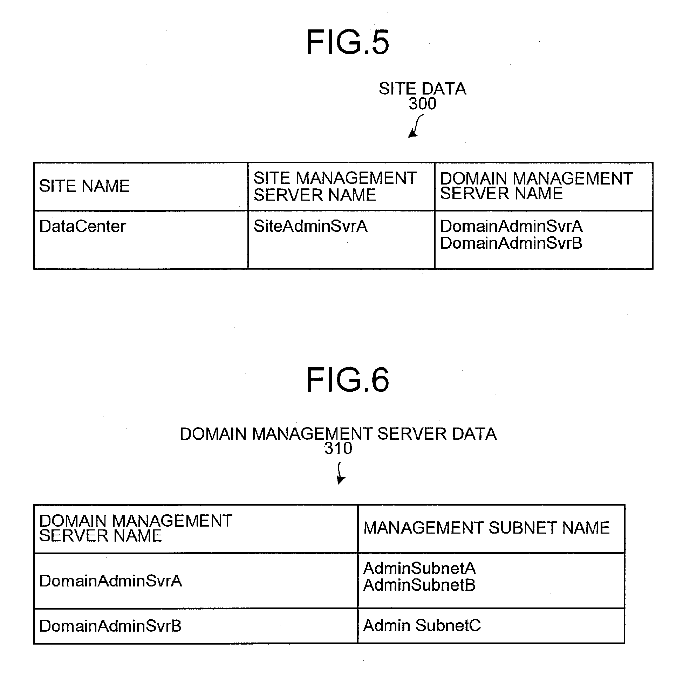

The processes performed at step S101 are explained in detail below. Fig. 5 is a diagram of an example of site data 300 registered as information on operation management servers. The site data 300 contains information on site, site management server, and domain management server.

The site is information that identifies a site that includes a resource to be managed. The site management server is information on the site management server 20 set to manage the site. The domain management server is information on the domain management servers 50 and 60 set to manage domains set in the site.

Fig. 6 is a diagram of an example of domain management server data 310 registered as information on the domain management servers 50 and 60. The domain management server data 310 contains information on domain management server and management subnet.

The domain management server is information equivalent to the domain management server explained in connection with Fig. 5. The management subnet is information on a subnet (management subnet) resource of which is managed by the domain management server.

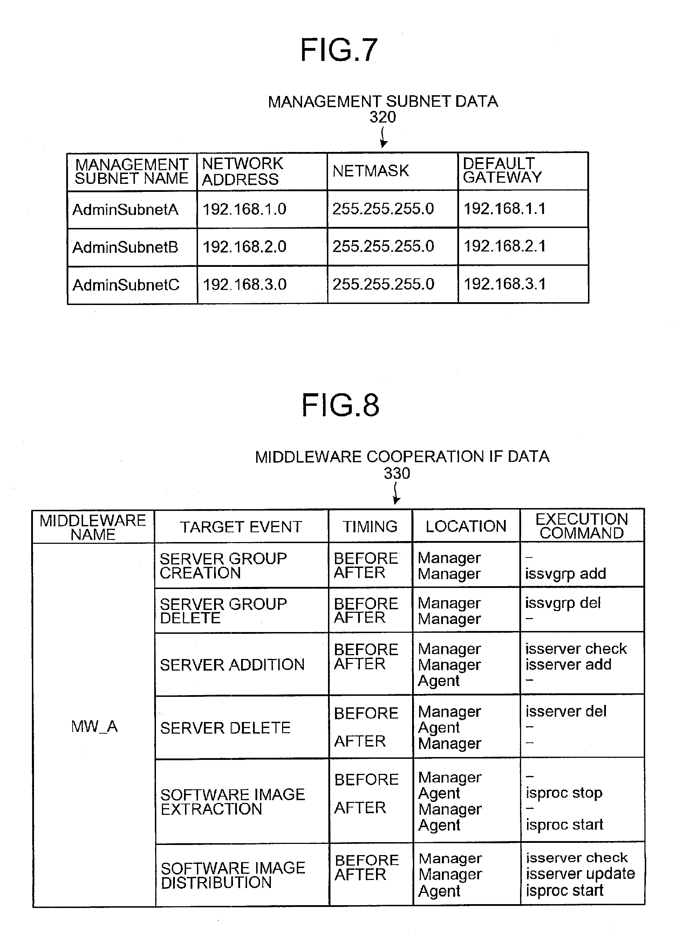

Fig. 7 is a diagram of an example of management subnet data 320 registered as information on subnets to be managed. The management subnet data 320 contains information on management subnet, network address, a netmask, and default gateway.

The management subnet is the same information as the management subnet explained in connection with Fig. 6. The network address is a network address for identifying the management subnet. The netmask is a netmask that defines which bits in an IP address are to be used as the network address. The default gateway is information on an IP address that identifies a default gateway used for transmitting data to outside the management subnet.

At step S101, the system resource manager 21 receives information on site, site management server, and domain management server, which are set by the user by operating the operation management client 10, and registers received information on the site data 300 shown in Fig. 5.

The system resource manager 21 receives information on domain management server and management subnet, which are set by the user by operating the operation management client 10, and registers received information on the domain management server data 310 shown in Fig. 6.

Thereafter, the system resource manager 21 registers information on network address, netmask, and default gateway, which correspond to the management subnet explained in connection with Fig. 6, on the management subnet data 320 shown in Fig. 7.

In addition, the system resource manager 21 notifies the AP-management control unit 27 of occurrence of an event such as addition to or deletion from the servers 110a to 110c, 140a to 140c, and 150a to 150c, and sets commands for executing various processes in cooperation with the AP-manag-ement control unit 27.

Fig. 8 is a diagram of an example of middleware cooperation IF data 330 containing commands for performing various processings in cooperation with middleware. The middleware cooperation IF data 330 contains information on middleware name, target event, timing, location, and execution command.

The middleware name is information on middleware with which the system resource manager 21 performs processes. The target event is information on events that the system resource manager 21 requests the middleware to execute. The timing is information on timing at which the system resource manager 21 transmits a request for executing processes to the middleware (before or after a process for the target event).

The location is information on locations where the middleware executes a command (a "manager" or an "agent"). The "manager" indicates that the command is executed on the site management server 20, while the "agent" indicates that the command is executed on the servers 110a to 110c, 140a to 140c, and 150a to 150c to be managed. The execution command is information on commands that notifies the middleware of occurrence of various events.

Referring back to Fig. 4, the system resource manager 21 performs a domain creating process and a linking process between created domains (step S102). The processes performed at step S102 are explained in detail below.

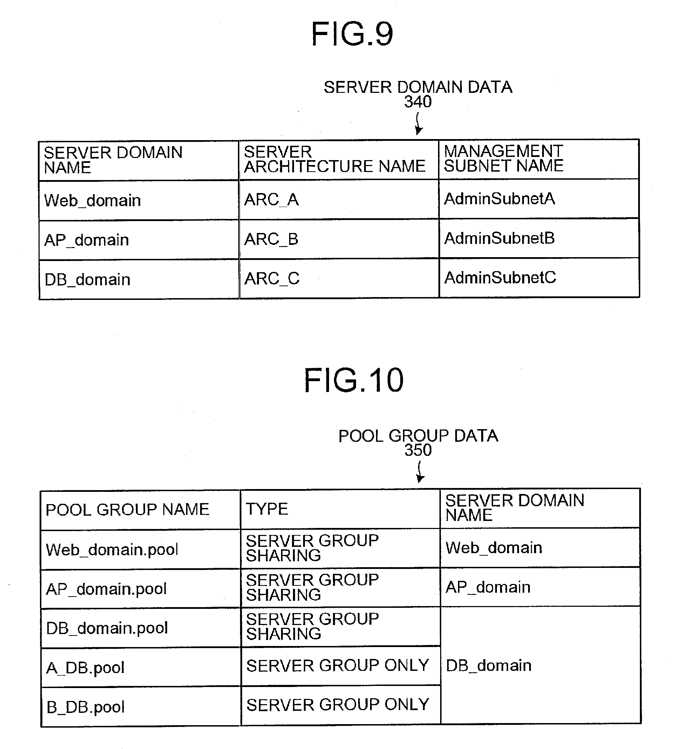

Fig. 9 is a diagram of an example of server domain data 340 stored as information on server domains to which the servers 110a to 110c, 140a to 140c, and 150a to 150c belong.

The server domain data 340 contains information on server domain, server architecture, and management subnet. The server domain is information on a domain to which the servers 110a to 110c, 140a to 140c, and 150a to 150c belong.

The server architecture is information on a CPU (central processing unit) architecture of the servers 110a to 110c, 140a to 140c, and 150a to 150c that belong to each of the server domains. The management subnet is information equivalent to the management subnet shown in Fig. 6.

At step S102, the system resource manager 21 receives information on settings of the server domains and the server architectures specified by the user by operating the operation management client 10, and registers received information on the server domain data 340. The server domains are set in units of the management subnet set at step S101.

Furthermore, at step S102, the system resource manager 21 sets server groups that belong to each of the server domains, and sets pool groups shared between the server groups and pool groups exclusive to specific server groups.

In this case, the server groups are created by classifying servers in the same server domain into one or more groups. The pool group is a pool of the servers assigned to each of the server groups.

Fig. 10 is a diagram of an example of pool group data 350 stored as information on pool groups. The pool group data 350 contains information on pool group, type, and server domain.

The pool group is information that identifies a pool of each of the above described servers. The type is information that indicates whether the pool group is to be shared by a plurality of the server groups or to be exclusively permitted for usage by specific server groups. The server domain is the same information as the server domain name explained in connection with Fig. 9.

The system resource manager 21 assigns the pool group to each of the server domains. When the server domain includes a plurality of the sever groups, the system resource manager 21 assigns the pool group exclusive to the server groups.

Thereafter, the system resource manager 21 receives information on storage domains set by the user by operating the operation management client 10, and registers received information on the system resource DB 26 as storage domain data 360 explained below.

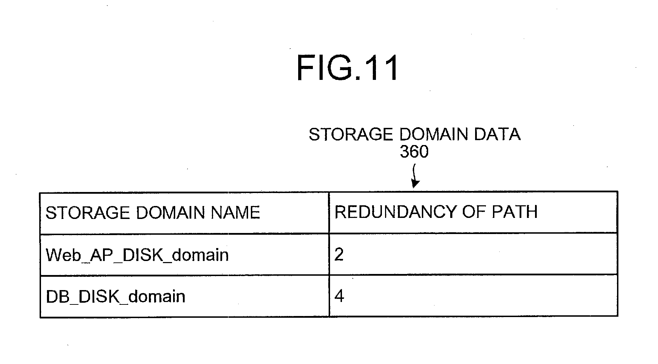

Fig. 11 is a diagram of an example of the storage domain data 360 stored as information on storage domains. The storage domain data 360 contains information on storage domain and redundancy of path. The storage domain is information that identifies a set storage domain. The redundancy of path is information on redundancy of a data communication path on the SAN.

Furthermore, the system resource manager 21 receives information on a network sub domain set by the user by operating the operation management client 10, and registers the information on the system resource DB 26 as network sub domain data 470 described below.

In this case, the network sub domain is a sub domain obtained by dividing a network domain to which a plurality of network devices that connect servers that belong to different server domains belong.

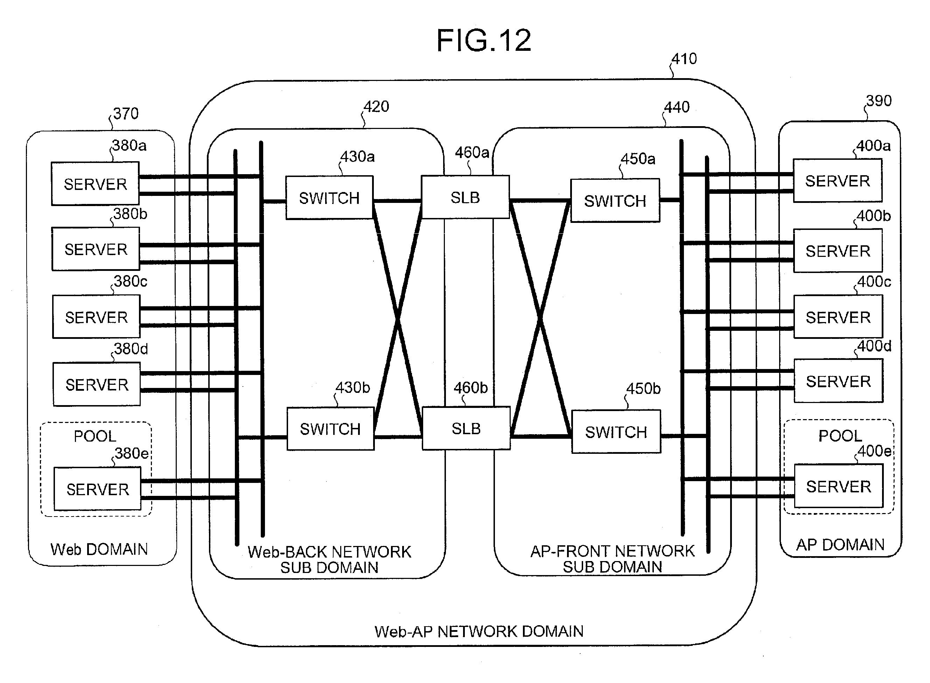

Fig. 12 is a schematic diagram for explaining a network domain and network sub domains. In Fig. 12, switches 430a, 430b, 450a, and 450b and SLBs 460a and 460b are depicted, which connect servers 380a to 380e that belong to a web domain 370 to servers 400a to 400e that belong to an AP domain 390.

In this case, the switches 430a and 430b configure a Web/back sub domain 420, the switches 450a and 450b configure an AP/front sub domain 440. The Web/back sub domain 420, the AP/front sub domain 440, the SLB 460a, and the SLB 460b configure a Web/AP network domain 410.

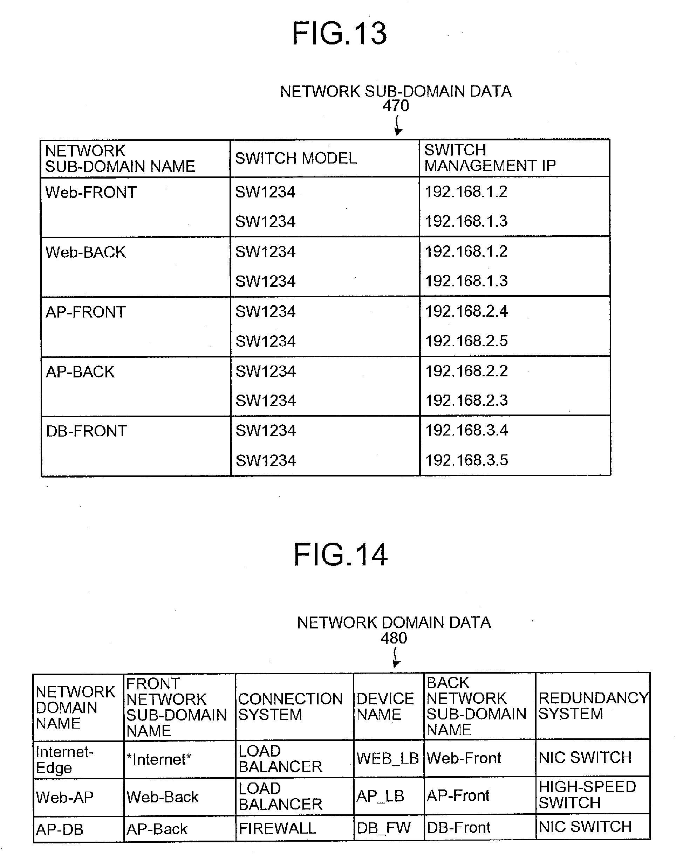

Fig. 13 is a diagram of an example of the network sub domain data 470 stored as information on network sub domains. The network sub domain data 470 contains information on network sub domain, switch model, and switch management IP.

The network sub domain is information that identifies the network sub domain explained in connection with Fig. 12. The switch model is information on a switch model that belongs to the network sub domain. The switch management IP is information on an IP address assigned to each of the switches for a management.

The system resource manager 21 receives information on the network domain set by the user by operating the operation management client 10, and registers the information on the system resource DB 26 as network domain data 480 described below.

Fig. 14 is a diagram of an example of the network domain data 480 stored as information on network domains. The network domain data 480 contains information on network domain, front sub domain, connection system, device name, back sub domain, and redundancy system.

The network domain is information that identifies the network domain explained in connection with Fig. 12. The front sub domain is information that identifies a sub domain closer to the Internet 70, when the network domain is divided into two sub domains by the SLBs 460a and 460b as a border.

The connection system is information on a system for connecting the network devices, such as the switches 430a and 430b that belong to the front sub domain, to the network devices, such as the switches 450a and 450b that belong to the back sub domain. For example, the above systems can include a system requiring a load balancer for a connection and a system requiring a firewall for a connection.

The back sub domain, as shown in Fig. 12, is information that identifies a sub domain closer to the Internet 70, when the network domain is divided into the two sub domains by the SLBs 460a and 460b as a border. The redundancy system is information that indicates a redundancy system if the data communication path is redundant on the network domain.

Moreover, the system resource manager 21 receives information on a connection device for the network sub domain set by the user by operating the operation management client 10, registers the information on the system resource DB 26 as load distributing apparatus data 490 described below. The connection device for the network sub domain indicates devices such as the SLBs 460a and 460b described in Fig. 12.

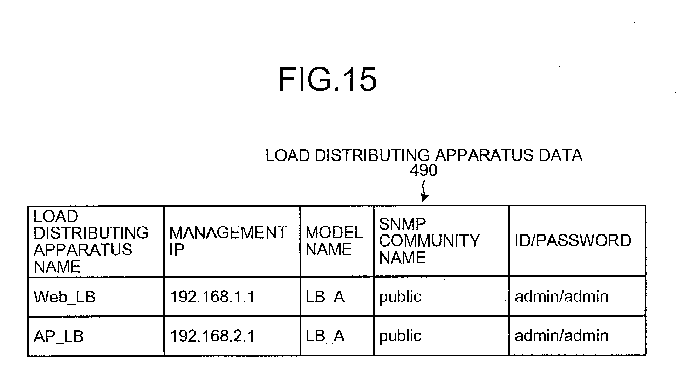

Fig. 15 is a diagram of an example of the load distributing apparatus data 490 stored as information on load distributing apparatuses. The load distributing apparatus data 490 contains information on load distributing apparatus name, management IP, model, SNMP community, and ID/password

The load distributing apparatus name is a name that identifies a connection device for the network sub domain. The management IP is information on an IP address assigned to each of the connection devices for administrating the connection device. The model is information on a model of the connection device.

The SNMP (Simple Network Management Protocol) community is information that identifies an SNMP community to which the domain management servers 50 and 60 and the site management server 20 that manage the connection devices, and an SNMP community to which the connection devices belong. The ID/password is information on an ID and a password required for accessing the connection devices.

The system resource manager 21 receives information on the network sub group set by the user by operating the operation management client 10, registers the information on the system resource DB 26 as network sub group data 660 described below.

In this case, the network sub group is a plurality of networks obtained by dividing the networks connecting between server groups that belong to different server domains.

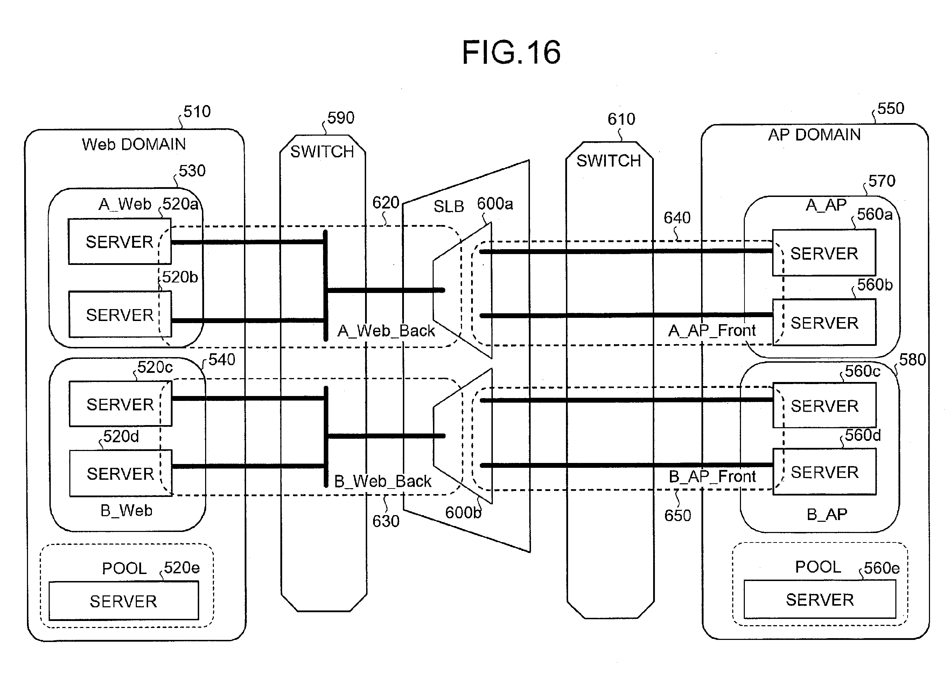

Fig. 16 is a schematic diagram for explaining a configuration of network sub groups. In Fig. 16, switches 590 and 610, and SLBs 600a and 600b are depicted, which connect servers 520a to 520e that belong to a web domain 510 to servers 560a to 560e that belong to an AP domain 550.

In this case, the servers 520a and 520b configure a A_Web server Group 530, the servers 520c and 520d configure a B_Web server Group 540, the servers 560a and 560b configure a server group A_AP 570, and the servers 560c and 560d configure a server group B_AP 580.

A network that connects the A_Web server Group 530 to the SLB 600a configures a network sub group A_Web_Back 620, a network that connects the B_Web server Group 540 to the SLB 600b configures a network sub group B_Web_Back 630, a network that connects the SLB 600a to the server group A_AP 570 configures a network sub group A_AP_Front 640, and a network that connects the SLB 600b to the server group B_AP 580 configures a network sub group B_AP_Front 650.

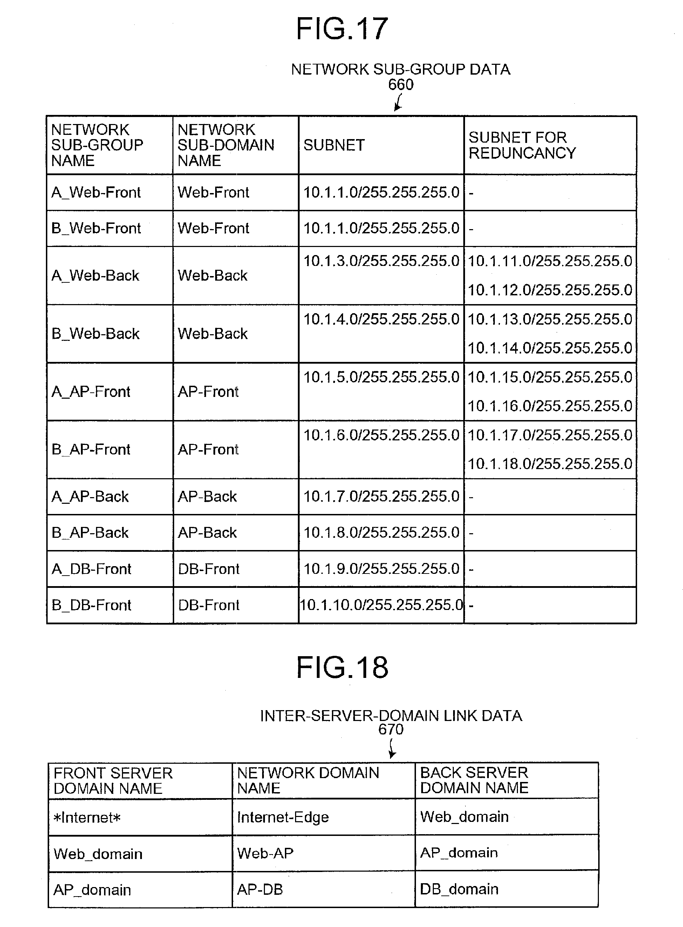

Fig. 17 is a diagram of an example of the network sub group data 660 stored as information on network sub groups. The network sub group data 660 contains information on network sub group, network sub domain, subnet, and subnet for redundancy.

The network sub group is a name that identifies the network sub groups described in the example in connection with Fig. 16. The network sub domain is information on the network sub domains to which the network sub group belongs.

The subnet is information on a network address and a subnet mask assigned to the network sub group. The subnet for redundancy is information on the network address and the subnet mask assigned to the network constituted of a redundant data communication line added as an extra, when the network that belongs to the network sub group is made redundant using a plurality of data communication lines.

After that, the system resource manager 21 receives information on association between server domains set by the user by operating the operation management client 10, registers the information on the system resource DB 26 as inter-server-domain link data 670 described below.

Fig. 18 is a diagram of an example of the inter-server-domain link data 670 stored as information on correspondence relations between server domains. The inter-server-domain link data 670 contains information on front server domain, network domain, and back server domain.

The front server domain is information that indicates a server domain closer to the Internet 70 among the server domains across the network domain shown in Fig. 12. The network domain is information that identifies the network domain described in Fig. 12. The back server domain is information that indicates a server domain more distant from the Internet 70 among the server domains across the network domain shown in Fig. 12.

Moreover, the system resource manager 21 receives information on association between server domain and storage domain set by the user by operating the operation management client 10, and registers the information on the system resource DB 26 as inter-server/storage-domain link data 680 described below

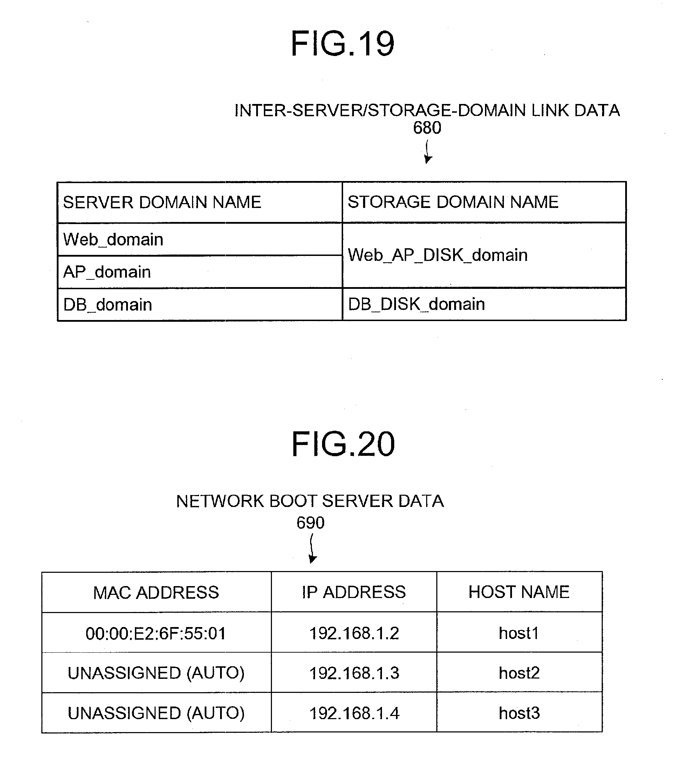

Fig. 19 is a diagram of an example of the inter-server/storage-domain link data 680 stored as information on correspondence relations between server domains. The inter-server/storage-domain link data 680 contains information on server domain and storage domain. The server domain is information equivalent to the server domain shown in Fig. 9. The storage domain is information equivalent to the storage domain shown in Fig. 11.

Referring back to Fig. 4, the system resource manager 21 performs a registering process of server resources and storage resources to be managed (step S103). The process performed at step S103 is explained in detail below.

When the user selects a management subnet on which the server is registered by operating the operation management client 10, the system resource manager 21 receives information on the management subnet selected by the user.

The system resource manager 21 also receives information on servers to be managed, which is input by the user by operating the operation management client10, from the operation management client 10, and stores received information in the domain resource DB 55 of the domain management server 50 as network boot server data 690 explained below. Subsequently, the servers registered are network booted, and registered as the server resources after various information on the severs are acquired.

Fig. 20 is a diagram of an example of the network boot server data 690 stored as information on network boot servers. The network boot server data 690 contains information on MAC address, IP address, and host name.

The MAC address is information on a MAC address of the server. The IP address is information on an IP addresses assigned to the server. The host name is information on a host name assigned to the server.

In this case, upon receiving information on MAC address of the network boot server input by the user, the system resource manager 21 automatically assigns the IP address and the host name to the server corresponding to the MAC address.

The system resource manager 21 performs network boot on the server to which the IP address and the host name are assigned, by using the virtual OS stored in the domain resource DB 55 of the domain management server 50, in cooperation with the system resource domain manager 51 of the domain management server 50.

The server sub RN 52, the resource manager agent 111a, and the server RM agent 112a work together to collect information on hardware of the server and transmit collected information to the system resource domain manager 51.

Thereafter, the system resource manager 21 acquires information on hardware of the server from the system resource domain manager 51, and stores acquired information in the system resource DB 26 as management target server data 700 explained below.

When the user inputs, by operating the operation management client 10, setting information indicating whether SAN boot is to be performed, in which a server is booted by the storages 160a to 160d connected via the SAN 170, the system resource manager 21 receives the setting information and registers the setting information on the management target server data 700.

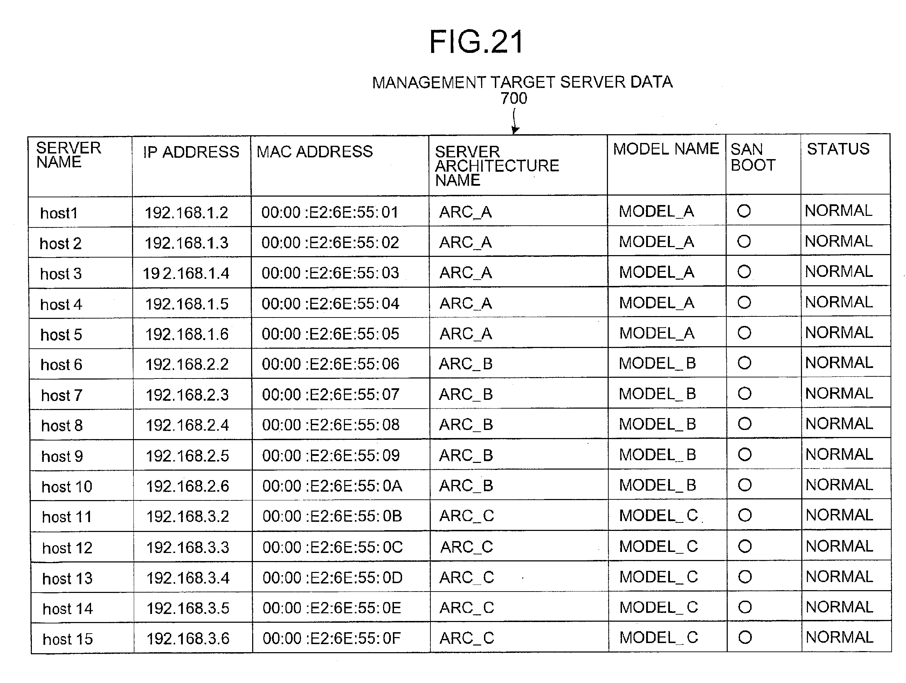

Fig. 21 is a diagram of an example of the management target server data 700 stored as information on servers to be managed. The management target server data 700 contains information on server name, IP address, MAC address, server architecture, model, SAN boot, and status.

The server name is a name that identifies a server to be managed. The IP address is an IP address that is assigned to the server. The MAC address is a MAC address of the server. The server architecture is information on CPU architecture of the server. The model is information that indicates the model of the server. The SAN boot is setting information that indicates whether the SAN boot is performed. The SAN boot is a booting of the server from the storages 160a to 160d connected to the server via the SAN 170. The status is information that indicates whether an abnormality occurs in the server.

Although it is assumed herein that the user specifies the MAC address of a network boot server, the server can be automatically selected. Specifically, when the user sets information that specifies the number of servers to be automatically selected by operating the operation management client 10, the system resource manager 21 receives the information from the operation management client 10.

The system resource manager 21 selects servers of specified number, and registers information on an IP address and a host name of the servers on the network boot server data 690 shown in Fig. 20.

In cooperation with the system resource domain manager 51 in the domain management server 50, the system resource manager 21 performs network boot on the servers assigned the IP address and the host name using the virtual OS stored in the domain resource DB 55 in the domain management server 50.

With the cooperation of the server sub RM 52, the resource manager agent 111a, and the server RM agent 112a, information on the MAC address, server architecture, model, and status of each server is collected and transmitted to the system resource domain manager 51.

After that, the system resource manager 21 obtains the information on the MAC address, server architecture, model, and status of each server from the system resource domain manager 51. The system resource manager 21 stores the information in the system resource DB 26 as the management target server data 700.

Subsequently, the system resource manager 21 registers a storage device to be managed. Examples of the storage device include FC switch and RAID device.

Specifically, when the user inputs information on the IP address of a storage to be registered as a management target with respect to each management subnet shown in Fig. 7, the system resource manager 21 receives the information from the operation management client 10. The system resource manager 21 stores information on a storage device corresponding to the IP address in the system resource DB 26, thereby registering the storage device.

After that, the system resource manager 21 adds the servers registered on the management target server data 700 shown in Fig. 21 to a server domain. Specifically, when the administrator specifies a server and a server domain where the server is to be added by operating the operation management client 10, the system resource manager 21 receives the information on the server and the server domain from the operation management client 10.

Referring to the management target server data 700 shown in Fig. 21, the system resource manager 21 checks whether the server architecture of the server matches server architecture registered on the server domain data 340 shown in Fig. 9.

The system resource manager 21 retrieves the management target server data 700 shown in Fig. 21, and checks that SAN boot is to be performed on the server.

Moreover, the system resource manager 21 checks a wire connection status of the network of the server that is added to the server domain. Specifically, the system resource manager 21 reads the inter-server-domain link data 670 shown in Fig. 18, acquires information on a front server domain and a back server domain for the server domain.

The system resource manager 21 reads the network domain data 480 shown in Fig. 14, and acquires information on a front server domain and a back server domain corresponding to the network domain.

After that, the system resource manager 21 reads the network sub domain data 470 shown in Fig. 13, and identifies a switch corresponding to the front sub domain and the back sub domain.

The system resource manager 21 requests the network RM 24 and the network sub RM 54 to check wire connections between servers and switches. In addition, the network RM 24 and the network sub RM 54 request the network RM agent 114a to check the wire connections between servers and switches, and acquire a check result.

When no error occurs in the wire connections between servers and switches, the system resource manager 21 associates information on the server with the pool group explained in connection with Fig. 10, and stores the information provisioning configuration data 710 in the system resource DB 26.

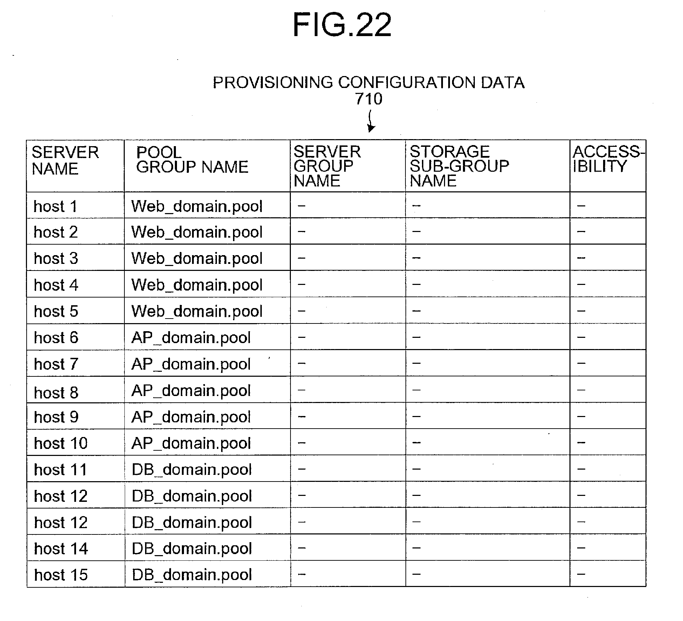

Fig. 22 is a diagram of an example of the provisioning configuration data 710 stored as information on groups to which servers belong. The provisioning configuration data 710 contains information on server name, pool group, server group, storage sub-group, and accessibility.

The server name is the same information as described in connection with Fig. 21. The pool group name is the same information as described in connection with Fig. 10. The server group is information that identifies a server group when servers on the same server domain are classified into one or more groups. At this point, information on the server group has not been registered.

The storage sub-group name is information that identifies a storage group when storages on the same storage domain are classified into one or more groups and assigned to each server in the server group. At this point, information on the storage sub-group has not been registered. The accessibility is information that indicates whether a server is allowed to access storages. At this point, information on the accessibility has not been registered.

After registering the saver name and the pool group name on the provisioning configuration data 710, the system resource manager 21 registers the storage device, which has been previously registered, on a storage domain.

Specifically, when the user specifies, by operating the operation management client 10, a storage domain and a storage device registered on the storage domain, the system resource manager 21 receives the information from the operation management client 10.

The system resource manager 21 reads the inter-server/storage-domain link data 680 shown in Fig. 19, and identifies the server domain corresponding to the storage domain.

Moreover, the system resource manager 21 checks uniformity of wire connections between servers that belong to the specified server domain and storage devices that belong to the storage domain, in corporation with the storage RM 25 and the storage RM agent 115a.

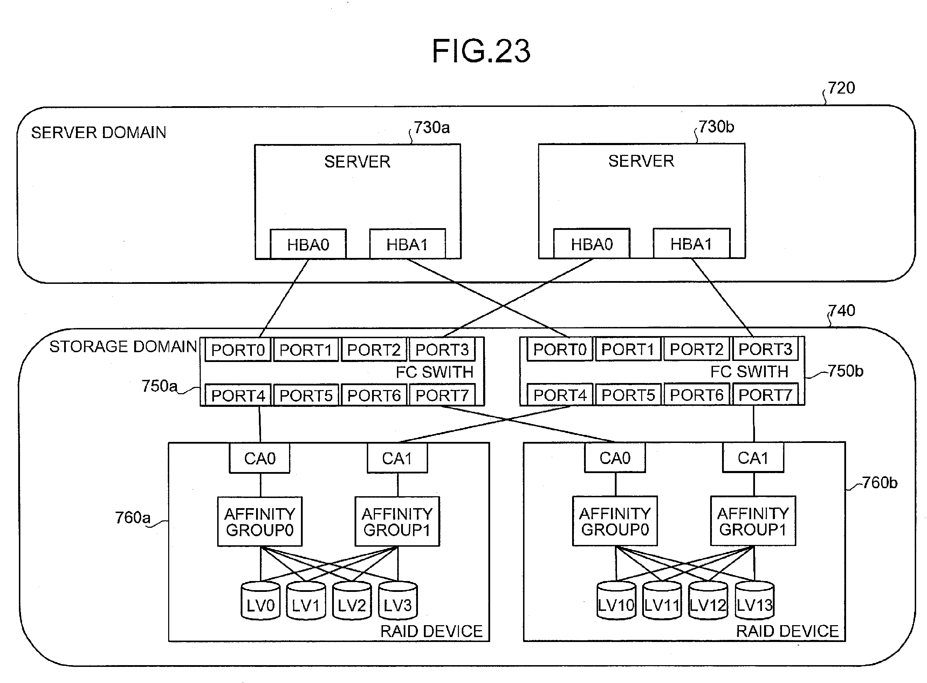

Fig. 23 is a diagram of an example of wire connections between servers and storage devices having uniform connections. In this example, as shown in Fig. 23, a wire connection between an FC (fiber channel) switch 750a that belongs to a storage domain 740 and servers 730a and 730b that belong to a server domain 720, and a wire connection between an FC switch 750b that belongs to the storage domain 740 and the servers 730a and 730b are uniform.

In addition, a wire connection between the FC switches 750a and 750b and a RAID device 760a that belongs to the storage domain 740, and a wire connection between the FC switches 750a and 750b and a RAID device 760b that belongs to the storage domain 740 are uniform.

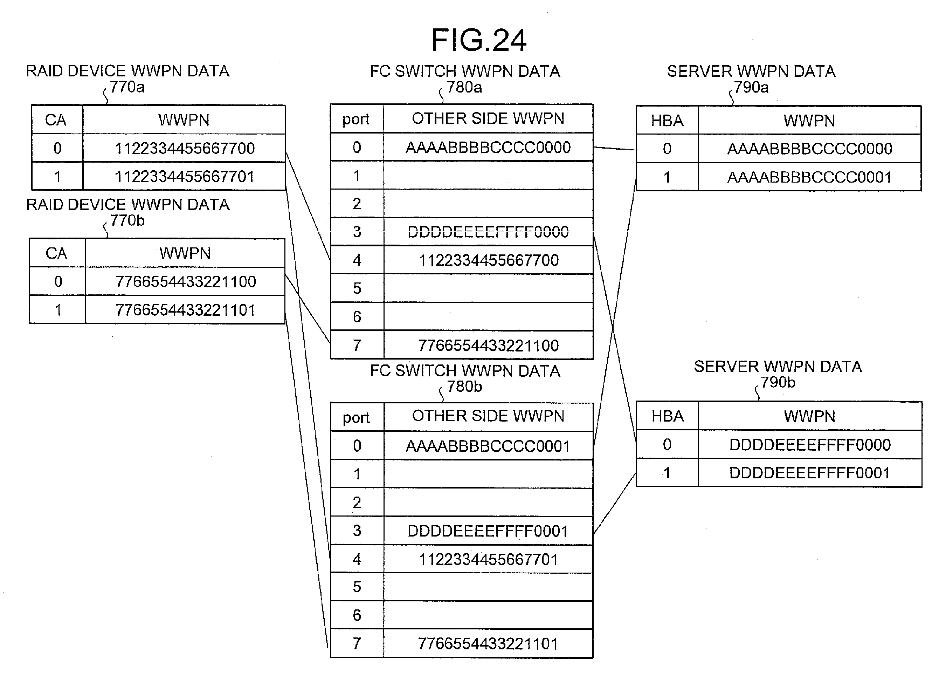

The system resource manager 21 performs the uniformity check of the above wire connections based on information on WWPN (world wide port name). At this check, the system resource manager 21 reads information on redundancy of a storage domain path from the storage domain data 360 shown in Fig. 11, and performs a redundancy check. Fig. 24 is a diagram for explaining a processing of checking a connection uniformity based on WWPN.

In Fig. 24, there depicted RAID device WWPN data 770a and 770b that are stored in the RAID devices 760a and 760b shown in Fig. 23, FC switch WWPN data 780a and 780b that are stored in the FC switches 750a and 750b, and server WWPN data 790a and 790b that are stored in the servers 730a and 730b.

The RAID device WWPN data 770a and 770b contains information on CA (channel adapter) and WWPN. The CA is information that identifies a channel adapter included in the RAID devices 760a and 760b. The WWPN is information on WWPN assigned to the channel adapter included in the RAID devices 760a and 760b.

The FC switch WWPN data 780a and 780b contains information on port and other side WWPN. The port is information that identifies ports of the FC switches 750a and 750b. The other side WWPN is information on WWPN assigned to the channel adapter of the RAID devices 760a and 760b connected to the ports of the FC switches 750a and 750b, or information on WWPN assigned to an HBA (host bus adapter) of the servers 730a and 730b connected to the ports of the FC switches 750a and 750b.

The server WWPN data 790a and 790b contain information on HBA and WWPN. The HBA is information that identifies an HBA included in the servers 730a and 730b. The WWPN is information on WWPN assigned to the HBA included in the servers 730a and 730b.

The system resource manager 21 can check the uniformity of a wire connection between devices by collecting the RAID device WWPN data 770a and 770b, the FC switch WWPN data 780a and 780b, and the server WWPN data 790a and 790b from the RAID devices 760a and 760b, the FC switches 750a and 750b, and the servers 730a and 730b, and by checking the associations of WWPN.

After that, the system resource manager 21 registers a storage area having an LUN (logical unit) set in advance and a storage area having an unset LUN, as storages for a pool.

Subsequently, the system resource manager 21 performs processing of creating a server group (step S104). The processing performed at step S104 are explained in detail below.

The system resource manager 21 receives information on a storage template set by the user by operating the operation management client 10, and registers the information on the system resource DB 26 as storage template data 800 described below. The storage template is setting information on configuration of later created storage for server group.

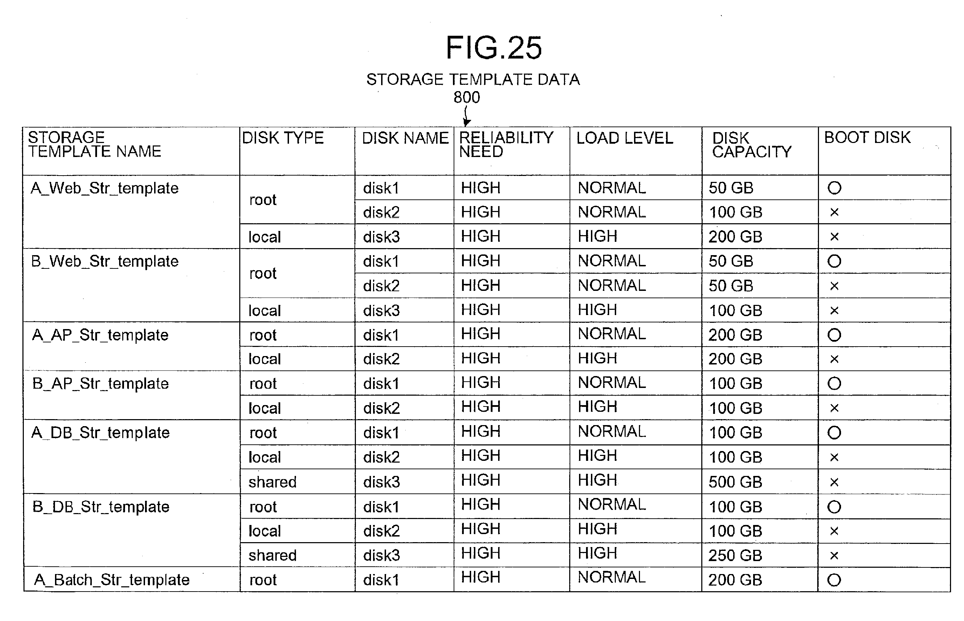

Fig. 25 is a diagram of an example of the storage template data 800 stored as information on storage templates. The storage template data 800 contains information on storage template, disk type, disk name, reliability need, load level, disk capacity, and boot disk.

The storage template is identification information that identifies an established storage template. The disk type is information on a type of an application of the disk included in the storage template.

For example, "root" denotes that the disk is used to store therein system data, "local" denotes that the disk is used to store therein individual server data, and "shared" denotes that the disk is used to store therein shared data among servers.

The disk name is a name that identifies a disk, and assigned to each of the disks. The reliability need is information on a reliability needed for the disk. The load level is information on a load level on the disk. The disk capacity is a storage capacity of the disk. The boot disk is information on whether the disk is used to boot a system.

Subsequently, the system resource manager 21 receives information on server groups that are set by a user by operating the operation management client 10, and stores the information in the system resource DB 26 as a server group data 810 explained below.

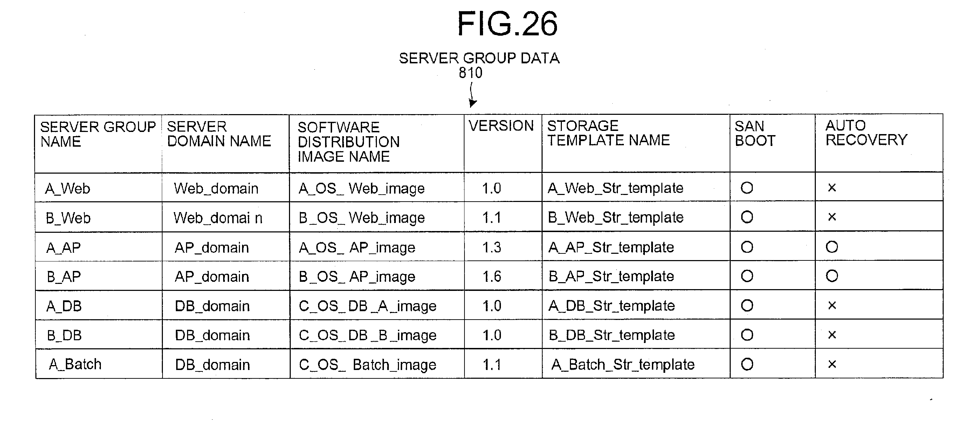

Fig. 26 is a diagram of an example of the server group data 810 stored as information on server groups. The server group data 810 contains information on server group, server domain, software distribution image, revision, storage template, SAN boot, and auto recovery.

The server group is identification information that identifies a group, if servers included in the same server domain are classified into one or a plurality of groups. The server domain is information on a server domain to which server groups belong. The software distribution image is information that identifies an image file in software distributed to the server that belongs to the server group.

The version is information on a version of a software distribution image. The storage template is same information as the storage template explained in connection with Fig. 25. The SAN boot is information on whether a SAN boot of the servers that belongs to the server group is performed. The auto recovery is information on whether a process of adding a server is automatically executed when a failure occurs in a server having a scale-out configuration in which a plurality of servers cooperatively work.

The system resource manager 21 registers information on a storage group corresponding to the server group on the system resource DB 26 as a server/storage group link data 820. In this case, the storage group denotes that storages included in the same storage domain are classified into one or a plurality of groups.

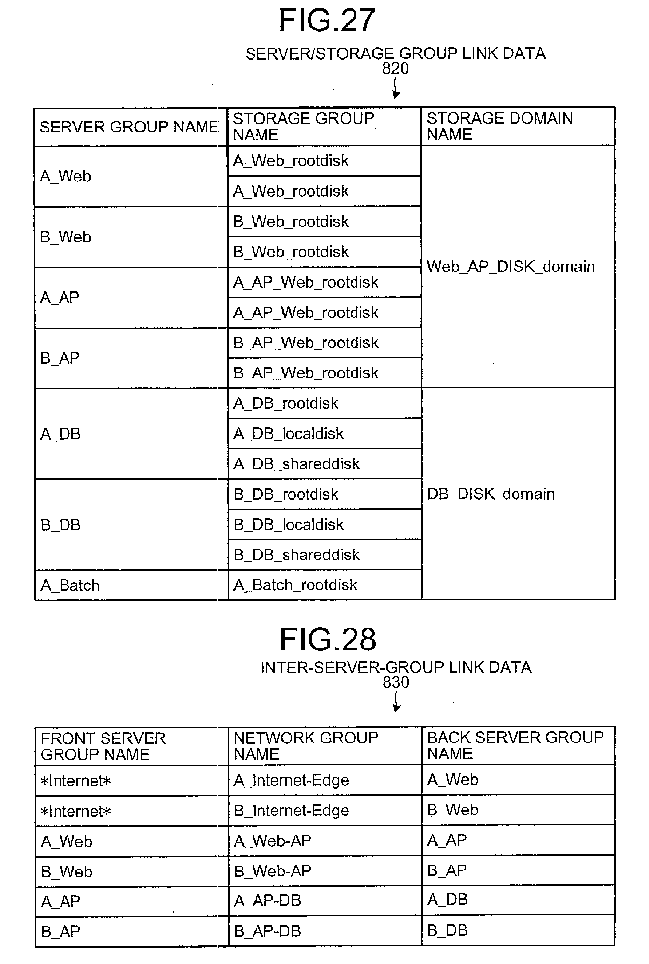

Fig. 27 is a diagram of an example of the server/storage group link data 820 stored as information on storage groups corresponding to the server groups. The server/storage group link data 820 contains information on server group, storage group, and storage domain.

The server group is the same information as the server group shown in Fig. 26. The storage group is identification information that identifies a storage group that is created correspondingly with respect to each of the server groups. The storage domain is identification information that identifies a storage domain to which the storage group belongs.

At the time of creating the storage group, the system resource manager 21 retrieves information on a storage template associated with the server group from the server group data 810 shown in Fig. 26, and also retrieves information on a disk type corresponding to the storage template from the storage template data 800 shown in Fig. 25.

The system resource manager 21 creates the storage group with respect to each of disk types such as "root", "local", and "shared" with respect to each of the server groups, and registers the information on the server/storage group link data 820.

Furthermore, the system resource manager 21 retrieves information on a storage domain corresponding to the server domain to which the server group belongs from the inter-server/storage-domain link data shown in Fig. 19, and registers the information on the server/storage group link data 820.

After that, the system resource manager 21 transmits a command for causing the AP managing unit 116a to recognize that the server group is added to the AP managing unit 116a. Specifically, the system resource manager 21 transmits "issvgrp add" shown in Fig. 8 to the AP managing unit 116a.

Subsequently, the system resource manager 21 receives information on correspondence relations among the server groups that are set by the user by operating the operation management client 10, and registers the information on the system resource DB 26 as inter-server-group link data 830 explained below.

Fig. 28 is a diagram of an example of the inter-server-group link data 830 stored as information on the correspondence relations among the server groups. The inter-server-group link data 830 contains information on front server group, network group, and back server group.

The front server group is information on a server group closer to the Internet 70 among server groups that are linked via the network group. In this case, the network group denotes a network group consisting of a combination of the network sub groups that link the server groups as explained in connection with Fig. 16.

The network group is identification information that identifies the network group. The back server group is information on a server group located more distant from the Internet 70 among server groups that are linked via the network group.

The system resource manager 21 stores information on the network group in the system resource DB 26 as network group data 850 explained below.

Specifically, the system resource manager 21 retrieves the inter-server-domain link data 670 shown in Fig. 18, and obtains information on a network domain that is set to be sandwiched between two server domains.

The system resource manager 21 retrieves the network domain data 480 shown in Fig. 14, and obtains information on a front sub domain, a back sub domain, and a device those corresponding to the network domain.

Furthermore, the system resource manager 21 retrieves the network sub group data 660 shown in Fig. 17, and searches a network sub domain corresponding to the front sub domain and the back sub domain from the network sub group data 660, and then extracts an unused network sub group out of network sub groups corresponding to the searched network sub domain.

Subsequently, the system resource manager 21 classifies a network device corresponding to the information on a device retrieved from the network domain data 480 shown in Fig. 14 into one or a plurality of groups, and stores the information in the system resource DB 26 as load distribution group data 840 explained below.

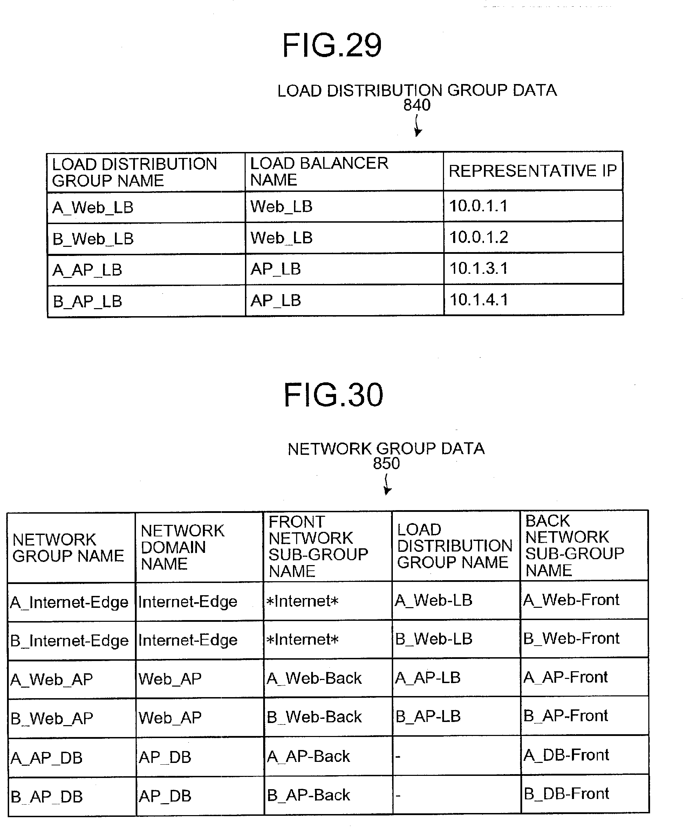

Fig. 29 is a diagram of an example of the load distribution group data 840 stored as information on groups of load distributing apparatuses. The load distribution group data 840 contains information on load distribution group, load balancer name, and representative IP.

The load distribution group is information that identifies a group, if a load balancer is classified into one or a plurality of groups. The load balancer name is a name that identifies a load balancer. The representative IP is information on an IP address assigned to each of the load distribution groups.

The system resource manager 21 creates information on correspondence relations among the network groups based on information on configurations of the network domain, the network sub group, the load distribution group, and the like, which belong to each of the network groups, and then stores the information in the system resource DB 26 as the network group data 850 explained below.

Fig. 30 is a diagram of an example of the network group data 850 stored as information on the network groups. The network group data 850 contains information on network group, network domain, front network sub group, load distribution group, and back network sub group.

The network group is the same information as the network group explained in connection with Fig. 28. The network domain is the same information as the network domain explained in connection with Fig. 18.

The front network sub group corresponds to the network sub group explained in connection with Fig. 17, and is information on a network sub group closer to the Internet 70 among network sub groups sandwiching the load distribution groups.

The load distribution group is the same information as the load distribution group explained in connection with Fig. 29. The back network sub group corresponds to the network sub group explained in connection with Fig. 17, and is information on a network sub group more distant from the Internet 70 among network sub groups sandwiching the load distribution groups.

Furthermore, the system resource manager 21 sets up VLAN of the network sub group in a switch that is registered on the network sub domain data 470 shown in Fig. 13 in cooperation with the network RM 24 and the network sub RM 54.

Subsequently, the system resource manager 21 adds a first server into the server group, and performs a process of creating a software image of software that is installed on the server (step S105). The process at step S105 is explained in detail below.

First, if the user specifies a server and a server group where the server is registered by operating the operation management client 10, the system resource manager 21 receives information on the server and the server group and registers the server on the server group.

The system resource manager 21 retrieves the server group data 810 shown in Fig. 26, and searches a storage template corresponding to the server group, and then obtains a setting condition of the storage template from the storage template data 800 shown in Fig. 25.

The storage RM 25 sets up such a logical volume that fulfills the setting condition of the storage template obtained by the system resource manager 21 to a pooled storage, and performs a process of assigning the storage in which the logical volume is set to the server group.

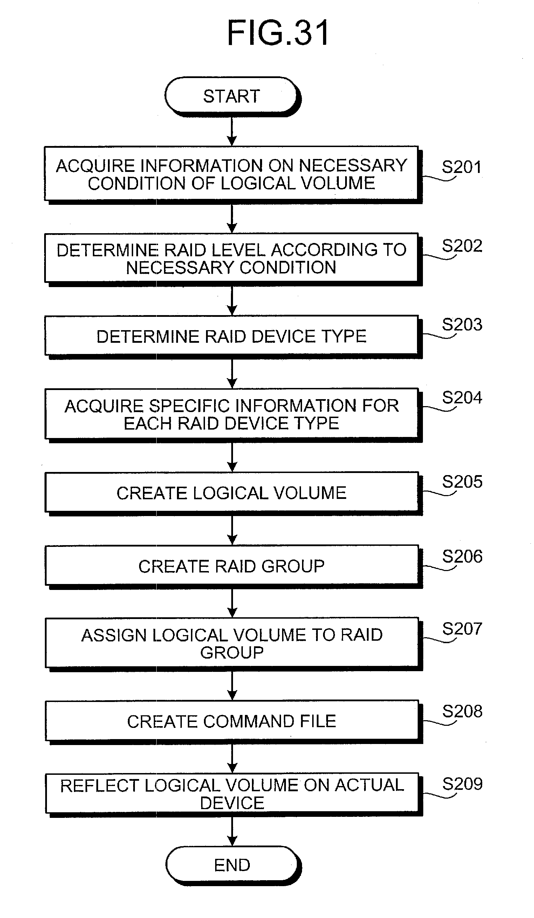

Fig. 31 is a flowchart of a processing procedure of a setting process of setting a logical volume to a RAID device. As shown in Fig. 31, the system resource manager 21 obtains information on a necessary condition for the logical volume (step S201). In this case, the necessary condition indicates information on reliability need, load level, and disk capacity those stored in the storage template data 800 shown in Fig. 25.

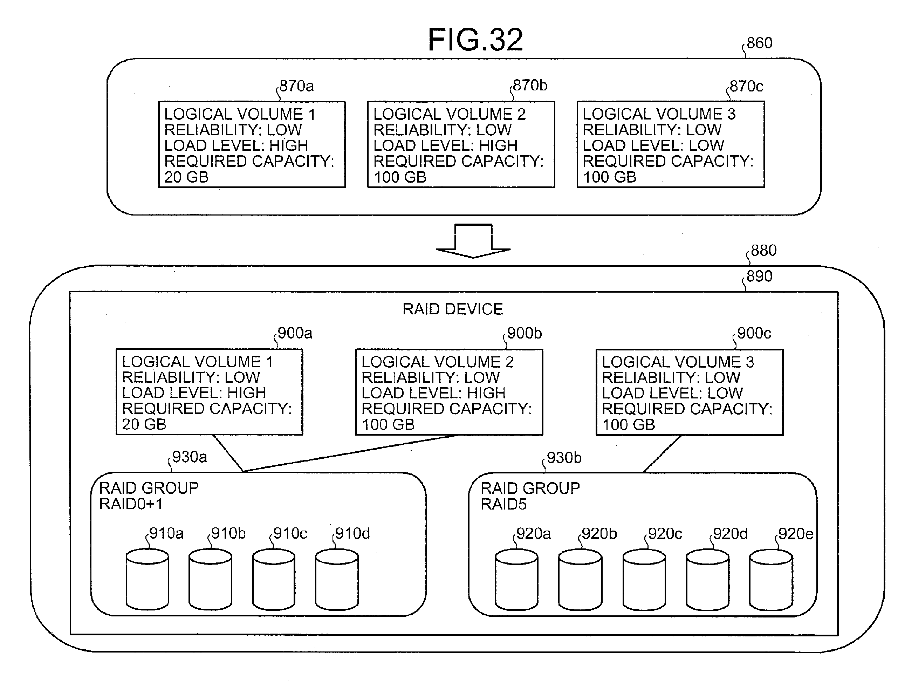

Fig. 32 is a diagram of an example of a setting screen for setting a logical volume. In Fig. 32, there are described a necessary condition output screen 860 on which the necessary condition for outputting the logical volume from the system resource manager 21 to the operation management client 10 is displayed and a logical-volume-configuration output screen 880 after setting the logical volume.

In the example shown in Fig. 32, a case is described in which three logical volumes that fulfill three necessary conditions needs to be created. Three necessary conditions 870a to 870c are output onto the necessary condition output screen 860.

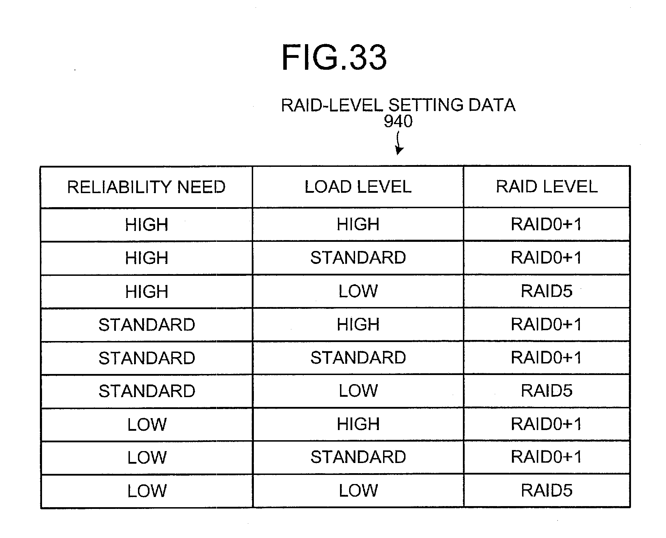

Referring back to Fig. 31, the system resource manager 21 determines a RAID level of the RAID device depending on the reliability need and the load level (step S202). Fig. 33 is a diagram of an example of RAID-level setting data 940 stored as information on settings of RAID-levels.

The RAID-level setting data 940 contains information on reliability need, load level, and RAID level. The reliability need is the same information as the reliability need explained in connection with Fig. 25. The load level is the same information as the load level explained in connection with Fig. 25. The RAID level is information on a RAID level that is determined depending on the reliability need and the load level.

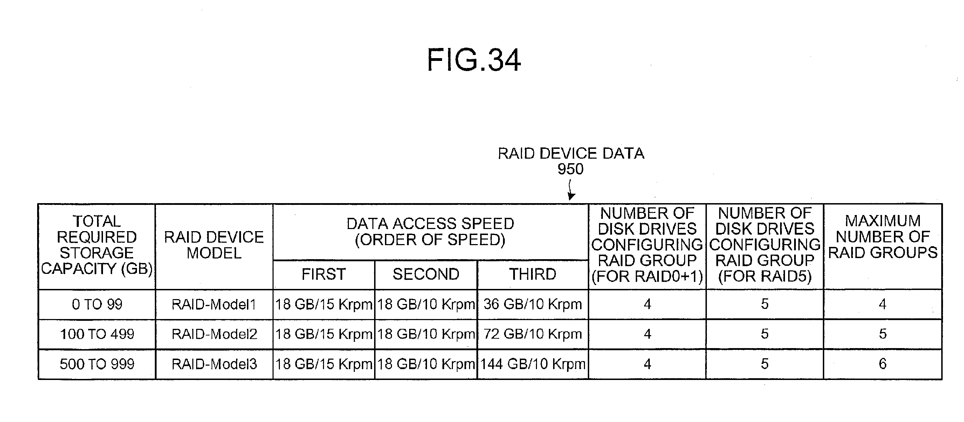

Referring back to Fig. 31, the system resource manager 21 determines a model of the RAID device based on a total amount of a required disk capacity (step S203). Fig. 34 is a diagram of an example of RAID device data 950 stored as information on the RAID device.

The RAID device data 950 contains information on total amount of required disk capacity, RAID device model, data access speed, the number of disk drives configuring RAID group (in a case of RAID 0+1), the number of disk drives configuring RAID group (in a case of RAID 5), and the maximum number of RAID groups.

The total amount of required disk capacity is information on a total amount of a disk capacity required for a logical volume. The RAID device model is information on a model of a RAID device appropriate for ensuring the total amount of the required disk capacity.

The data access speed is information on a data access speed of a disk drive that is specified by the RAID device model. The data access speed contains information on three types of the "first", "second", and "third" disk drives in order of data access speed.

The number of disk drives configuring RAID group (in a case of RAID 0+1) is information on the number of disk drives configuring a RAID group in the case of RAID 0+1. The number of disk drives configuring RAID group (in a case of RAID 5) is information on the number of disk drives configuring a RAID group in the case of RAID 5. The maximum number of RAID groups is information on the maximum number of RAID groups to be created.

Referring back to Fig. 31, the system resource manager 21 obtains unique information with respect to each of the RAID device models from the RAID device data 950 as explained in Fig. 34 (step S204).

In this case, the unique information is information on a type of the "first" disk drive out of the data access speed, the number of disk drives configuring the RAID group (in the case of RAID 0+1), the number of disk drives configuring the RAID group (in the case of RAID 5), and the maximum number of the RAID groups.

Then, the storage RM 25 creates a logical volume (step S205). Specifically, the storage RM 25 creates such a logical volume that fulfills each of the necessary conditions of the logical volume, and sets up the logical volume in the RAID device.

On the logical-volume-configuration output screen 880 shown in Fig. 32, a case is described in which logical volumes 910a to 910d and 920a to 920e that fulfill each of the necessary conditions 900a to 900c are set in the RAID device 890.

Referring back to Fig. 31, the storage RM 25 creates a RAID group in which the logical volumes are grouped by each of RAID levels (step S206). Then, the storage RM 25 assigns a logical volume to the created RAID group (step S207).

In the example shown in Fig. 32, the logical volumes 910a to 910d that fulfill the necessary conditions 900a and 900b have the same RAID level of RAID 0+1, and thus the logical volumes 910a to 910d are grouped into a RAID group 930a. In addition, the logical volumes 920a to 920e that fulfill the necessary condition 900c have the same RAID level of RAID 5, and thus the logical volumes 920a to 920e are grouped into a RAID group 930b.

Upon creating the RAID groups, the storage RM 25 sets disk drives that belong to each of the RAID groups to disk drive types that are determined based on the data access speed of the RAID device data 950 shown in Fig. 34.

Furthermore, the storage RM 25 sets the number of disk drives that configure a RAID device to the number of disk drives determined based either on the number of disk drives configuring the RAID group (in the case of RAID 0+1) or the number of disk drives configuring the RAID group (in the case of RAID 5) those included in the RAID device data 950 shown in Fig. 34.

Furthermore, the storage RM 25 creates such RAID groups that the number of the RAID groups is below the maximum number of the RAID groups included in the RAID device data 950 shown in Fig. 34.

On the logical-volume-configuration output screen 880 shown in Fig. 32, the logical volumes 910a to 910d and 920a to 920e, which fulfill the necessary conditions 900a to 900c and are respectively assigned to the RAID groups 930 and 940, are respectively connected to the corresponding necessary conditions 900a to 900c by lines.

Referring back to Fig. 31, the storage RM 25 creates a command file that reflects the configuration of the logical volumes shown in Fig. 32 to the RAID device (step S208). Then, the storage RM 25 reflects the created logical volume to the actual apparatus based on the command file (step S209).

After that, the system resource manager 21 registers the logical volume set in the RAID device as a storage sub group by associating the logical volume with server groups to which each of servers belongs, and sets an access right to the server groups of the servers. Specifically, the system resource manager 21 stores information on server group, storage sub group, and availability of access in the provisioning configuration data 710 shown in Fig. 22.

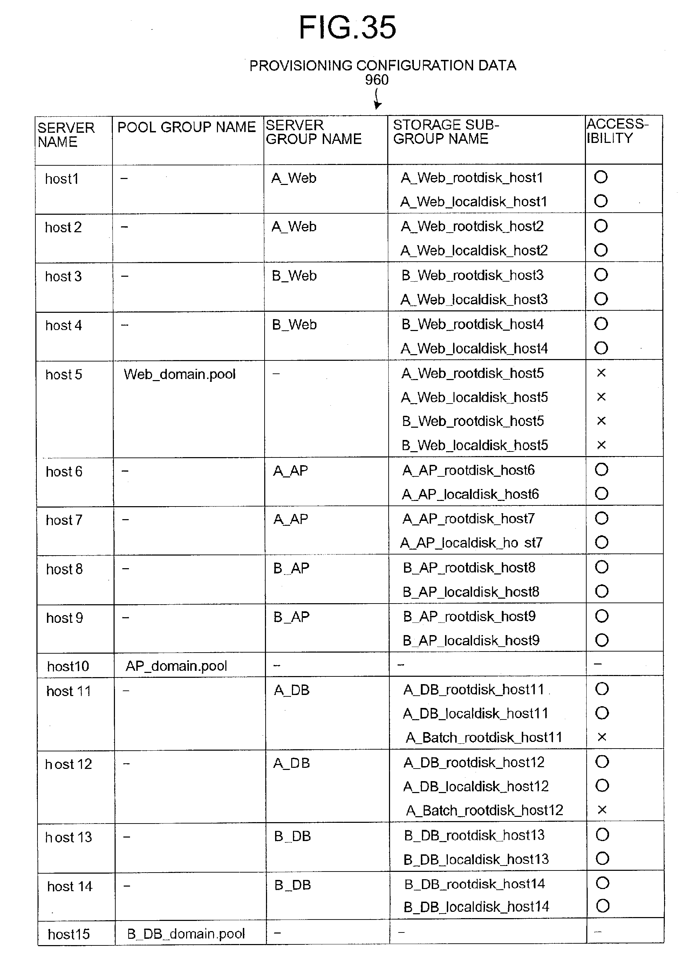

Fig. 35 is a diagram of an example of provisioning configuration data 960 containing storage subgroups. The provisioning configuration data 960 contains information on server group, storage sub group, and availability of access in addition to the provisioning configuration data 710 shown in Fig. 22.

When the logical volume configured in the RAID device is to be recognized by a server and registered as a storage sub group, the storage RM 25 sets up the logical volume in the following procedure.

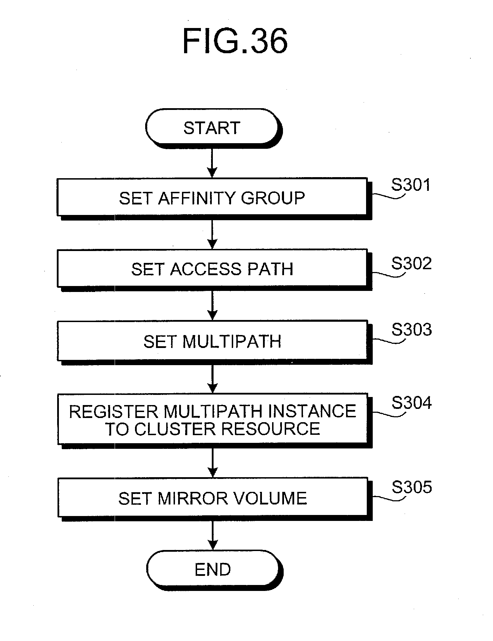

Fig. 36 is a flowchart of a processing procedure of a process of setting a logical volume, in which the server recognizes the logical volume. As shown in Fig. 36, the storage RM 25 groups logical volumes included in a RAID device, and sets up an affinity group (step 5301).

In this case, the affinity group is information on a correspondence relation between a logical unit number (LUN) to be recognized by the server and a logical volume (LV) number in the RAID device.

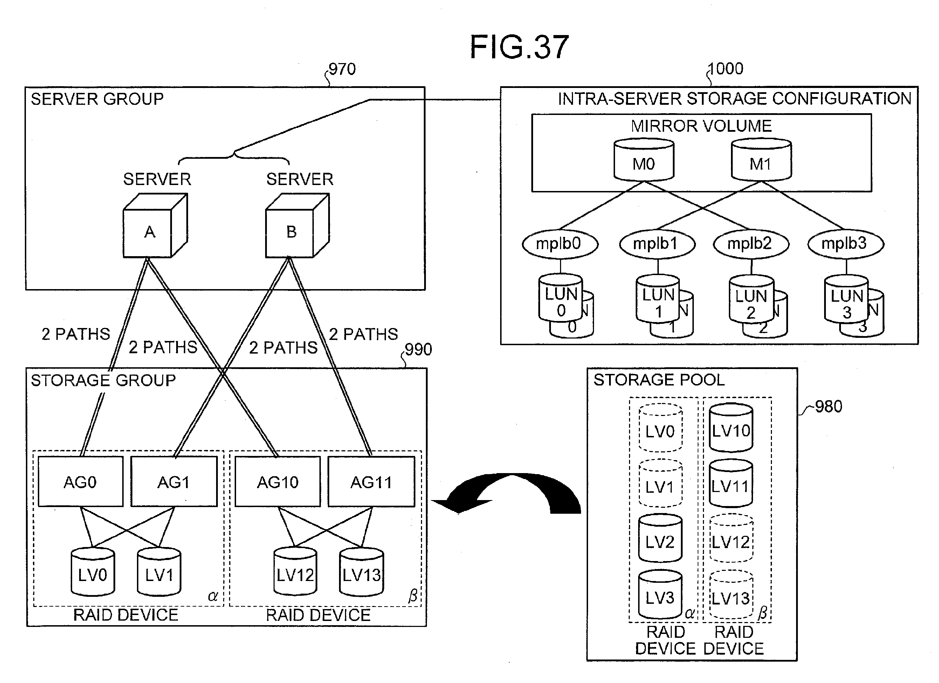

Fig. 37 is a schematic diagram for explaining a process of setting the logical volume configured in the RAID device. In Fig. 37, there are described a server group 970, which is configured by a server A and a server B, and a storage pool 980, which is configured by a RAID device α in which logical volumes LV0, LV1, LV2, and LV3 are configured and a RAID device β in which logical volumes LV10, LV11, LV12, and LV13 are configured.

Moreover, in Fig. 37, there is described a storage group 990 to which the logical volumes LV0 and LV1 in the RAID device α and the logical volumes LV12 and LV13 in the RAID device β are added from the storage pool 980.

The logical volumes LV0 and LV1 in the RAID device α, which are added into the storage group 990, are set to belong to an affinity group 0 and an affinity group 1. Also, the logical volumes LV12 and LV13 in the RAID device β are set to belong to an affinity group 10 and an affinity group 11.

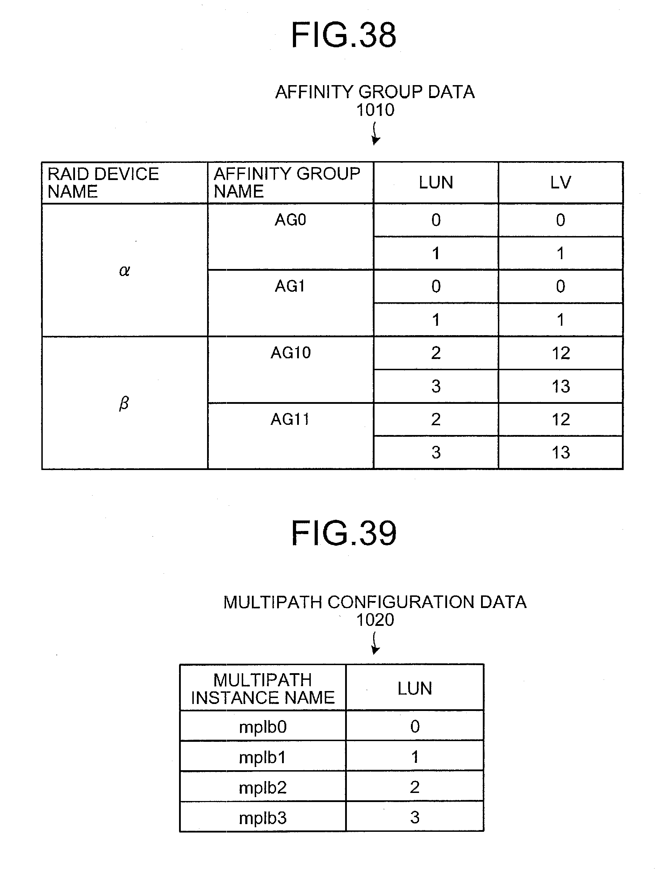

Fig. 38 is a diagram of an example of affinity group data 1010 containing information on affinity groups. The affinity group data 1010 contains information on RAID device name, affinity group name, LUN, and LV.

The RAID device is identification information that identifies each of RAID devices. The affinity group is information on an affinity group that is set in each of the RAID devices. The LUN is identification information that identifies a logical volume when accessed from the server A or the server B. The LV is identification information that identifies a logical volume.

Referring back to Fig. 36, the storage RM 25 checks redundancy paths between the servers A and B and the logical volumes LV0, LV1, LV12, and LV13, and sets an access path by selecting a path (step S302).

The storage RM 25 sets a multipath for a logical unit (step S303). Fig. 39 is a diagram of an example of multipath configuration data 1020 stored as information on multipath configurations.

The multipath configuration data 1020 contains information on multipath instance and LUN. The multipath instance is information that identifies an instance of set multipath. The LUN is information that identifies a logical unit that corresponds to the set multipath instance and that is to be recognized by either the server A or the server B.

The storage RM 25 registers the set multipath instance as a constituent element of the mirror volume on a cluster resource of the server to which a clustering is performed (step S304). Thereafter, the storage RM 25 sets a mirror volume group constituted of a pair of volumes of different RAID devices, using the multipath instance registered on the cluster resource (step S305).

An intra-server storage configuration 1000 set inside the server "A" or the server "B" is described in Fig. 37. In the storage configuration 1000, a mirror volume M0 configured with a multipath instance mplb0 and a multipath instance mplb2, and a mirror volume M1 configured with a multipath instance mplb1 and a multipath instance mplb3 are set.

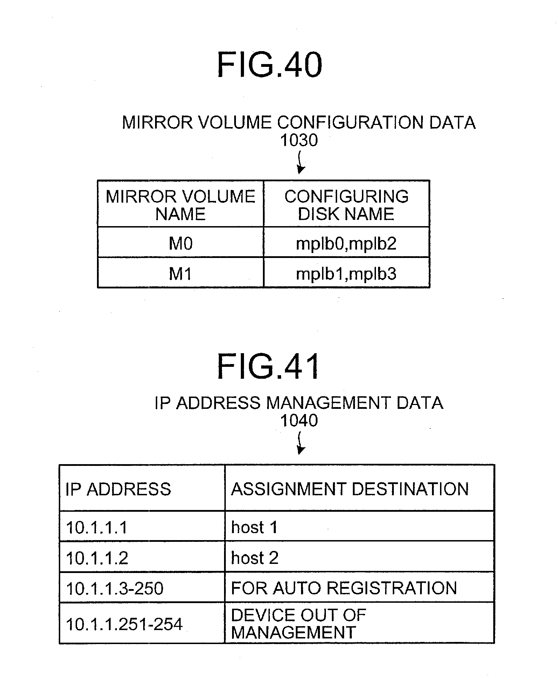

Fig. 40 is a diagram of an example of mirror volume configuration data 1030 stored as information on configurations of mirror volumes. The mirror volume configuration data 1030 contains information on mirror volume and configuring disk.

The mirror volume is identification information that identifies a set mirror volume. The configuring disk is identification information that identifies a logical unit constituting the mirror volume. The configuring disk stores therein information on the multipath instance stored as the multipath configuration data 1020 shown in Fig. 39. Accordingly, it is possible to specify the LUN corresponding to the mirror volume by referring to the multipath configuration data 1020.

The affinity group data 1010 shown in Fig. 38 is stored in the system resource DB 26 and the RAID device by the storage RM 25. The multipath configuration data 1020 shown in Fig. 39 and the mirror volume configuration data 1030 shown in Fig. 40 are stored in the system resource DB 26 by the storage RM 25, and stored, by the storage RM agent 115a, in the server to be managed.

Referring back to the explanation of the processing of creating the software image at step S105 shown in Fig. 4, the network RM 24 performs a setting of a network of the server registered on the server group.

More specifically, the network RM 24 reads information on a network group that includes the server group to which the server is added as a front server group and a back server group, from the inter-server-group link data 830.

The network RM 24 reads the network group data 850 shown in Fig. 30 and extracts a front network sub group and a back network sub group corresponding to the network group.

Subsequently, the network RM 24 reads the network sub group data 660 shown in Fig. 17, searches the network sub group corresponding to the front network sub group and the back network sub group, and assigns an IP address to the server based on information on the subnet assigned to the network sub group.

Fig. 41 is a diagram of an example of IP address management data 1040 stored as information on IP addresses assigned to servers. The IP address management data 1040 is stored in the system resource DB 26 by the system resource manager 21.

The IP address management data 1040 contains information on IP address and assignment destination. The IP address is information on an IP address assigned to the server. The assignment destination is information that identifies the server to which the IP address is assigned.

Subsequently, the network RM 24 assigns a load distribution group including a representative IP address to the network group corresponding to the server group to which the server is added, based on the load distribution group data 840 shown in Fig. 29 and the network group data 850 shown in Fig. 30. At this state, a load distribution function of the load balancer is stopped.

A user installs the software such as OS to be installed in the server to the storage sub group associated with the server to be added to the server group. The storage sub group is configured by using a SAN technology.

After the installation is finished, the software sub RM 53 creates the software image constituted of a group of the software such as OS, device driver, and application software, in cooperation with the software RM 23 and the software RM agent 113a, and stores the software image created in the domain resource DB 55.

More specifically, the software RM 23 reads the middleware cooperation IF data 330 shown in Fig. 8, and the software RM agent 113a transmits a command necessary to be executed before acquiring the software image to the AP managing unit 116a that is a function unit realized by the middleware.

In other words, the software RM agent 113a transmits a command for stopping the function of the AP managing unit 116a and stops the function of the AP managing unit 116a. The software sub RM 53 shutdowns the system of the server. The software sub RM 53 performs a network boot of the server using tentative OS stored in the domain resource DB 55 of the domain management server 50 of the server.

Thereafter, the software sub RM 53 creates the software image of the software installed in the server started. The software RM 23 registers information on the software image on the system resource DB 26 as software image management data 1050 described below.

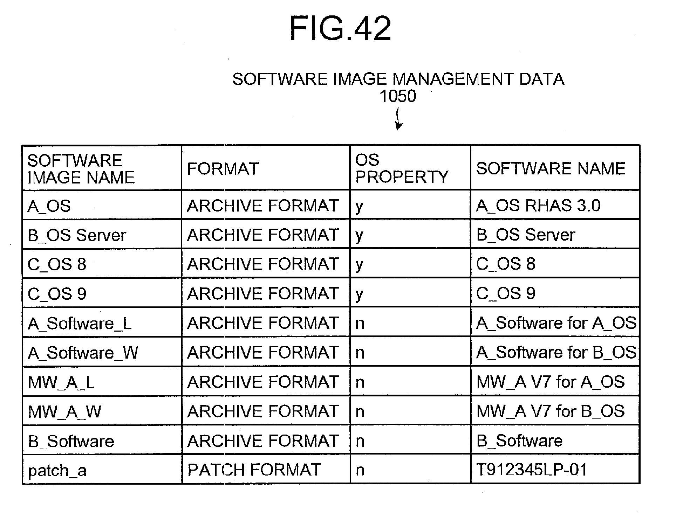

Fig. 42 is a diagram of an example of the software image management data 1050 stored as information on software images. The software image management data 1050 contains information on software image name, format, OS property, and software name.

The software image name is a name of a software image. The format is information that indicates whether a software image is created in archive format or in patch format. The OS property is information that indicates whether a software image is an OS software image. The software name is a name of software for which a software image is created.

The software sub RM 53 creates a software distribution image to be distributed to other servers, based on the software image created. Specifically, the software sub RM 53 creates a software distribution image in which software images are grouped of a plurality of software installed in a storage for the first server.

The system resource manager 21 stores information on the software distribution image in the system resource DB 26 as software distribution image management data 1060 described below.

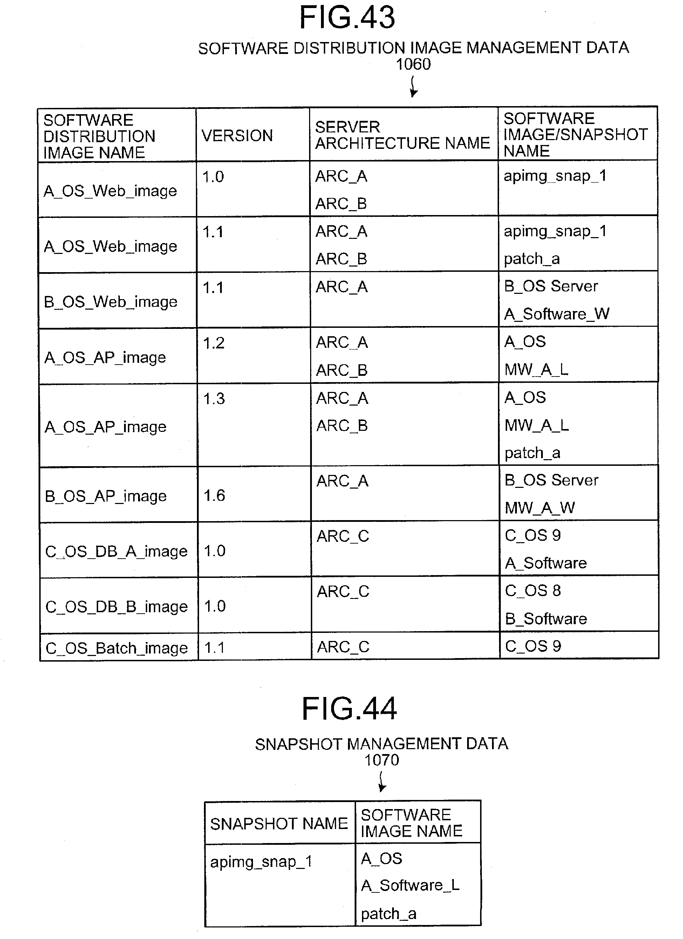

Fig. 43 is a diagram of an example of the software distribution image management data 1060 stored as information on software distribution images. The software distribution image management data 1060 contains information on software distribution image name, version, server architecture, and software image/snapshot.

The software distribution image name is a name of a software distribution image. The version is a version of the software distribution image. The server architecture is a CPU architecture of the server to which the software distribution image is distributed. The software image/snapshot is information that indicates a software image or a snapshot included in the software distribution image.

The snapshot is a software image of the software installed in the server at a specific timing. The system resource manager 21 registers information on the snapshot on the system resource DB 26 as snapshot management data 1070 described below.

Fig. 44 is a diagram of an example of the snapshot management data 1070 stored as information on snapshots. The snapshot management data 1070 contains information on snapshot name and software image. The snapshot name is a name of a snapshot. The software image is information on a software image included in the snapshot.

The software RM 23 reads the middleware cooperation IF data 330 shown in Fig. 8. The software RM agent 113a transmits a command necessary to be executed after acquiring the software image to the AP managing unit 116a that is a function unit realized by the middleware.

More specifically, the software RM agent 113a transmits a command for starting the AP managing unit 116a on standby and starts the AP managing unit 116a. The network RM 24 connects the server to a VLAN by performing a setting of the VLAN to a switch, activates a load distribution function of the load balancer, and assigns the server as a target server to which a load is distributed.

Thereafter, the system resource manager 21 reads the middleware cooperation IF data 330 shown in Fig. 8, and transmits a command necessary to be executed after creating the server group to the AP-management control unit 27 that is a function unit realized by the middleware.

More specifically, the system resource manager 21 transmits a command that enables a recognition of an addition of the server group to the AP-management control unit 27. The AP-management control unit 27 performs an installation and a setting of application programs to the server in cooperation with the AP managing unit 116a, and sets the server to be in a state available for a task.

Referring back to Fig. 4, the system resource manager 21 performs a processing of adding the second server and subsequent servers to the server group (step S106). The processing performed at step S106 is described in detail below.

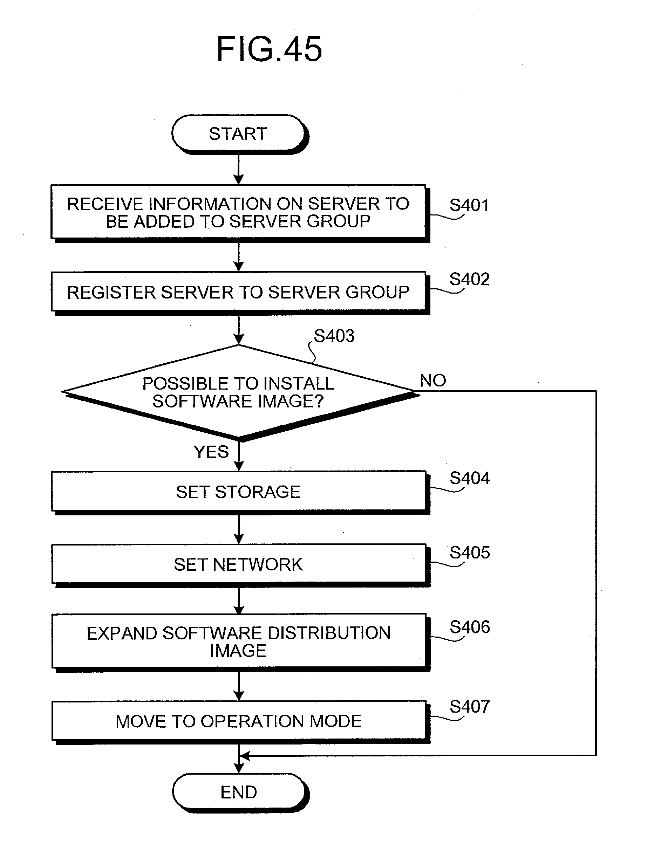

Fig. 45 is a flowchart of a processing procedure of a processing of adding a server to a server group. As shown in Fig. 45, the system resource manager 21 receives information on the server and the server group when a user specifies the server and the server group on which the server is registered by operating the operation management client 10 (step S401).

The system resource manager 21 registers the server on the server group (step S402). Subsequently, the system resource manager 21 reads the management target server data 700 shown in Fig. 21 and the software distribution image management data 1060 shown in Fig. 43, and checks whether the server architecture of the server is enabled for an installation of the software image (step S403). When the server architecture of the server is not enabled for the installation of the software image (NO at step S403), the processing of adding the server to the server group ends.

When the server architecture of the server is enabled for the installation of the software image (YES at step S403), the storage RM 25 performs a processing of setting the storage to the server, in the same manner for setting the storage to the first server (step S404). Specifically, the storage RM 25 performs a processing of setting the logical volume described in connection with Figs. 31 and 36 to the server.

Thereafter, the network RM 24 performs a network boot of the server registered on the server group using a tentative OS in the same manner for setting the network to the first server, and performs a setting of the network to the server (step 5405).

The software sub RM 53 expands the software distribution image created from the software installed in the first server onto the storage sub group associated with the second server, and reboots the server using expanded software (step S406).

When the software distribution image is expanded onto the storage sub group associated with the server, the software RM 23 stores information on the software distribution image distributed in the system resource DB 26.

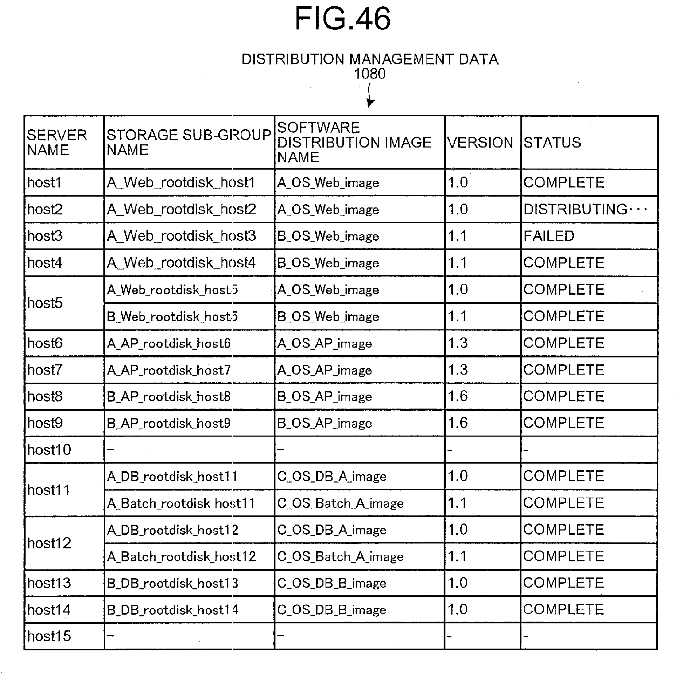

Fig. 46 is a diagram of an example of distribution management data 1080 stored as information on distribution statuses of software distribution images. The distribution management data 1080 contains information on server, storage sub group, software distribution image, version, and status.

The server is information that identifies a server to which the storage sub group is assigned. The storage sub group is information that identifies a storage sub group on which the software distribution image is expanded. The software distribution image is information on a software distribution image expanded on the storage sub group. The status is information that indicates a status of distributing the software distribution image.

Referring back to Fig. 45, the system resource manager 21 performs a processing of moving a mode of the second server to be in an operation mode in cooperation with the network RM 24 and the AP-management control unit 27 (step S407).

Specifically, the network RM 24 assigns an IP address to the second server based on information on the subnet to which the first server belongs, at the timing of rebooting the server. The information on the IP address assigned to the second server is stored in the IP address management data 1040 shown in Fig. 41 by the system resource manager 21.

Thereafter, the network RM 24 connects the server to VLAN by performing a setting of VLAN to a switch, and registers the server on the load balancer as a target server to which a load is distributed.

The system resource manager 21 transmits a command for causing the AP-management control unit 27 to recognize that the server is added to the server group to the AP-management control unit 27. The AP-management control unit 27 performs an installation or a setting of the application to the server in cooperation with the AP managing unit 116a, and sets the server to be in a state available for the task.

When adding the third server or subsequent servers to the server group, the processing of adding the server described in connection with Fig. 45 is repeated.

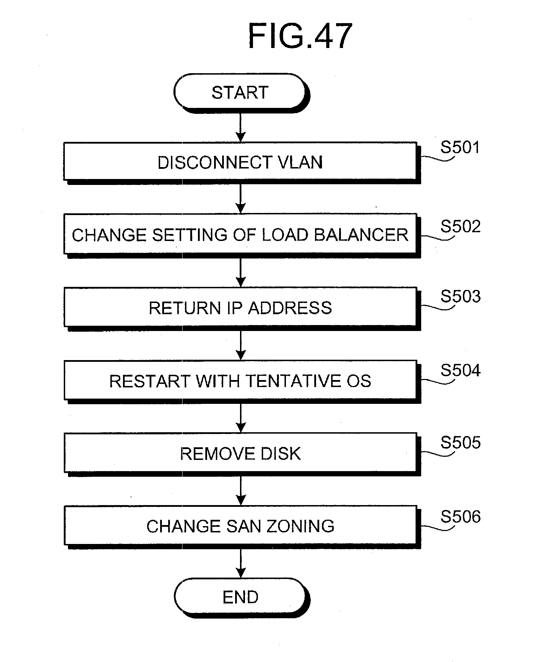

A processing of deleting the server added to the server group from the server group is described below. Fig. 47 is a flowchart of a processing procedure of a server delete processing of deleting a server from a server group.

As shown in Fig. 47, the network RM 24 disconnects VLAN set to the server, in cooperation with the network sub RM 54 (step S501). The network RM 24 changes a setting of the load balancer and removes the server from the target servers to which a load is distributed, in cooperation with the network sub RM 54 (step S502).

Subsequently, the network RM 24 returns the IP address assigned to the server (step S503). The software sub RM 53 reboots the server by a network boot, using the tentative OS stored in the domain resource DB 55 of the domain management server 50 (step S504).

The storage RM 25 removes a disk assigned to the server to be deleted from the server group (step S505). The storage RM 25 changes a SAN zoning that is a logical connection relation between the servers and the storages set to the servers, and sets a SAN zoning between the servers excluding the server and the storages (step S506).

A processing is described, of previously setting information on software, network, and the like to a server in a pool for adding the server resource at a high speed when abnormality occurs in the server or a load on the server increases.

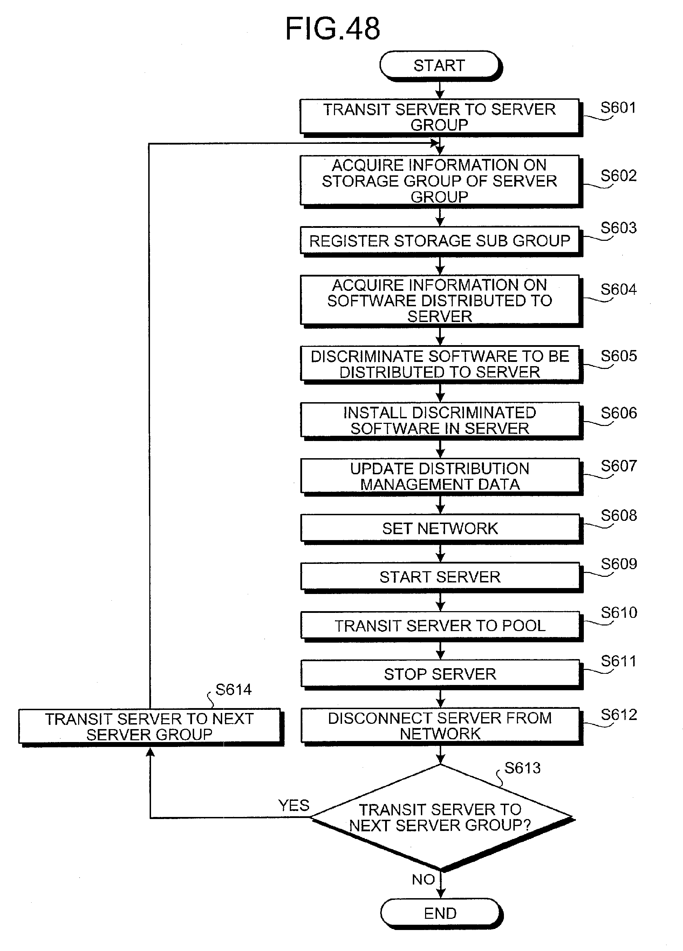

Fig. 48 is a flowchart of a processing procedure of a processing of previously setting information on software, network, and the like to a server in a pool. As shown in Fig. 48, the system resource manager 21 receives information on the server to be added and the server group to which the server is added from the operation management client 10, and transits (registers) the server to a corresponding server group (step S601).

The system resource manager 21 reads the server/storage group link data 820 shown in Fig. 27 and acquires information on the storage group of the server group (step S602). The system resource manager 21 creates a storage sub group name based on acquired information on the storage group, and registers created storage sub group name on the provisioning configuration data 960 shown in Fig. 35 (step 5603).

Thereafter, the system resource manager 21 reads the distribution management data 1080 shown in Fig. 46, and acquires information on software distributed to the server to be added (step S604). The system resource manager 21 reads the server group data 810 shown in Fig. 26 and discriminates software to be distributed to the server to be added (step S605). The software RM 23 installs the software discriminated to the server to be added (step S606), and updates the distribution management data 1080 shown in Fig. 46 (step S607).

The network RM 24 performs a network setting of the server (step S608). The server RM 22 starts the server (step S609), and the system resource manager 21 transits the server to the pool (step S610).

The server RM 22 stops the server (step S611). The network RM disconnects the server from the network (step S612). When the server is transited to a next server group (YES at step S613), the system resource manager 21 transits the server to the next server group (step S614) and the process control returns to step S602. On the other hand, when the server is not transited to the next server group (NO at step S613), the process ends.

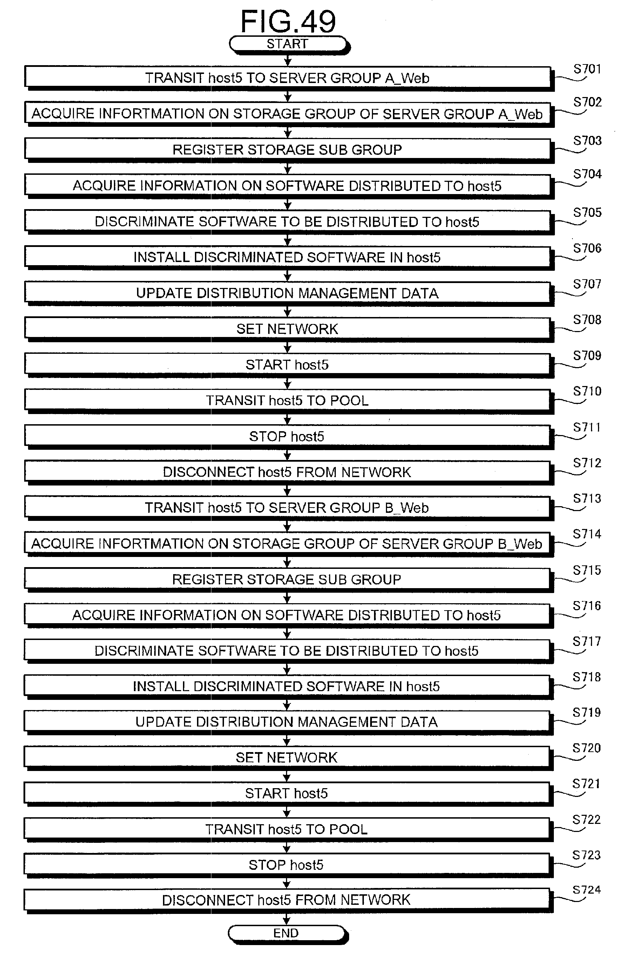

A flowchart described in Fig. 48 is explained in detail below. Fig. 49 is a flowchart of a detailed processing procedure of a processing of previously setting information on software, network, and the like to a server in a pool. In the example shown in Fig. 49, the server name of the server to be added is "host5", while the server groups to which the server is added are "A_Web" and "B_Web".

As shown in Fig. 49, the system resource manager 21 receives information on the server to be added (hereinafter, the server to be added is described as host5 in connection with Fig. 49) and the A_Web server Group to which host5 is added from the operation management client 10, and transits (registers) host5 to the A_Web server Group (step 5701).

The system resource manager 21 reads the server/storage group link data 820 shown in Fig. 27, acquires information on the storage group of the A_Web server Group (information indicating that the storage group for activating the A_Web server Group is A_Web_rootdisk) (step S702), creates the storage sub group name "A_Web_rootdisk_host5" based on acquired information on the storage group, and registers the storage sub group name created on the provisioning configuration data 960 shown in Fig. 35 (step S703).

Subsequently, the system resource manager 21 reads the distribution management data 1080 shown in Fig. 46 and acquires information on the software distributed to host5 (the distribution management data 1080 shown in Fig. 46 is an example after a distribution and any software is not distributed to host5 at this timing) (step 5704).

The system resource manager 21 reads the server group data 810 shown in Fig. 26, and discriminates the software "A_OS_Web_image version 1.0" to be distributed to host5 (step S705). The software RM 23 installs the soft image "apimg_snap_1" corresponding to the discriminated software "A_OS_Web_image version 1.0" to host5 (step S706), and updates the distribution management data 1080 shown in Fig. 46 (step 5707).

The network RM 24 performs a network setting of host5 (step S708), the server RM 22 starts host5 (step S709), and the system resource manager 21 transits host5 to the pool (step S710).

Thereafter, the server RM 22 stops host5 (step S711), the network RM 24 disconnects host5 from the network (step S712), and the system resource manager 21 transits host5 to the B_Web server Group (step S713).

The system resource manager 21 reads the server/storage group link data 820 shown in Fig. 27, acquires information on the storage group of the B_Web server Group (information indicating that the storage group for starting the B_Web server Group is B_Web_rootdisk) (step S714), creates the storage sub group name "B_Web_rootdisk_host5", and registers created storage sub group name on the provisioning configuration data 960 shown in Fig. 35 (step S715).

Subsequently, the system resource manager 21 reads the distribution management data 1080 shown in Fig. 46, and acquires information on the software distributed to host5 (step S716).

The system resource manager 21 reads the server group data 810 shown in Fig. 26, and discriminates the software "B_OS_Web_image version 1.1" to be distributed to hosts (step 5717). The software RM 23 installs the soft image "B_OSServer, A_Software_W" corresponding to the discriminated software "B_OS_Web_image version 1.1" to host5 (step S718), and updates the distribution management data 1080 shown in Fig. 46 (step S719).

The network RM 24 performs a network setting of host5 (step S720). The server RM 22 starts host5 (step S721). The system resource manager 21 transits host5 to the pool (step S722). The server RM 22 stops host5 (step S723). The network RM 24 disconnects host5 from the network (step S724).

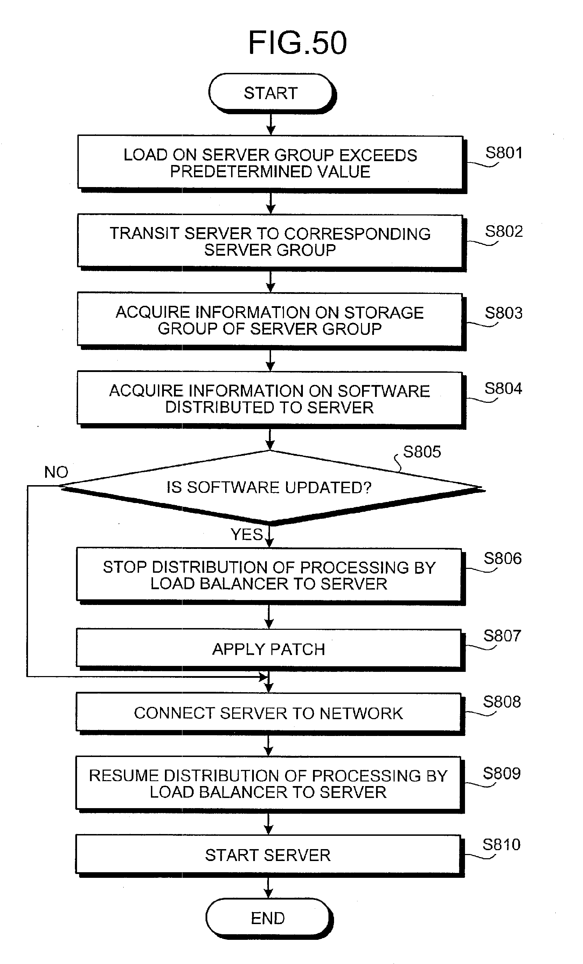

A processing of adding server resource when abnormality occurs in the server or a load on the server increases is explained below. Fig. 50 is a flowchart of a processing procedure of adding server resource when abnormality occurs in the server or a load on the server increases. The system resource manager 21 receives information indicating that a load on the server group exceeds a predetermined value (step S801), and transits the server to be added to a corresponding server group (step S802).

The system resource manager 21 reads the server/storage group link data 820 shown in Fig. 27, acquires information on the storage group of the server group (step S803), reads the distribution management data 1080 shown in Fig. 46, and acquires information on the software distributed to the server to be added (step S804).

Upon reading the server group data 810 shown in Fig. 26, and if the software in the corresponding server group is updated (step S805), the network RM 24 stops distribution of processing by the load balancer to the server (step S806). The software RM 23 applies patch (step S807), and the network RM 24 connects the server to the network (step S808). On the other hand, if the software is not updated (NO at step S805), the process control proceeds to step S808.

The network RM 24 resumes distribution of processing by the load balancer to the server (step S809), the server RM starts the server (step S810). Although the processing is described in the example shown in Fig. 50 in which the server resources are added to the server group when the system resource manager 21 receives information indicating that the load on the server group exceeds the predetermined value, the same processing is performed when a failure occurs in the server or when receiving commands for transiting the server from the operation management client 10.

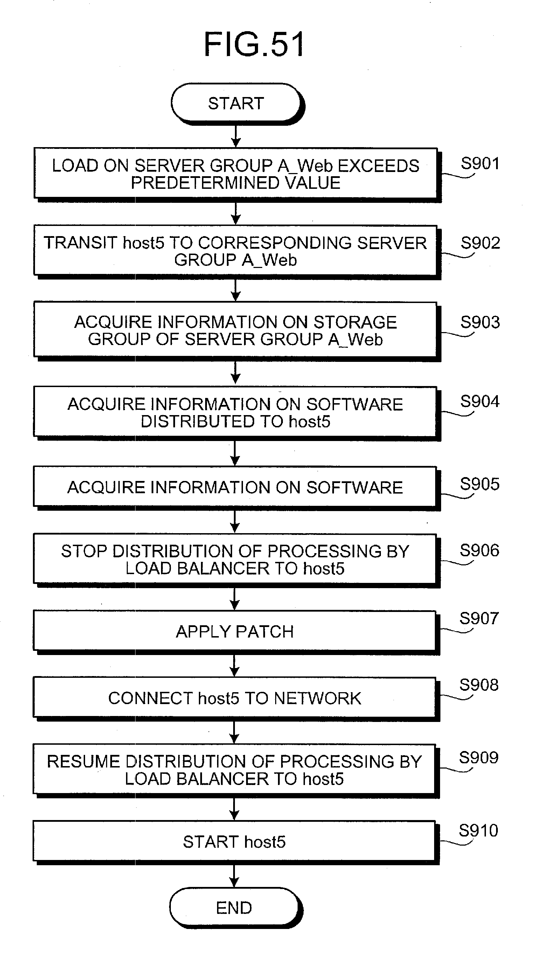

A processing of adding the server resource when abnormality occurs in the server or a load on the server increases shown in Fig. 50 is explained in detail below. Fig. 51 is a flowchart of a detailed processing procedure of adding server resource when abnormality occurs in the server or a load on the server increases. In the example shown in Fig. 51, it is assumed that load on the A_Web server Group increases and the server (the server name is host5) is to be added.

As shown in Fig. 51, the system resource manager 21 receives information indicating that a load on the A_Web server Group exceeds a predetermined value (step S901), and transits host5 to the A_Web server Group (step S902).

The system resource manager 21 reads the server/storage group link data 820 shown in Fig. 27, acquires information on the storage group of the server group (information indicating that the storage group for starting the A_Web server Group is A_Web_rootdisk) (step S903), reads the distribution management data 1080 shown in Fig. 46, and acquires information on the software distributed to host5 (information indicating that the A_OS_Web_imaga version 1.0 is distributed to host5) (step S904).

The system resource manager 21 reads the server group data 810 and acquires information on the software of the A_Web server Group (in this flowchart, it is assumed to receive information indicating that the software of the A_Web server Group is A_OS_Web_image version 1.1) (step 5905).

Because the software of the A_Web server Group is updated from version 1.0 to version 1.1, the network RM 24 stops distribution of processing by the load balancer to host5 (step 5906). The system resource manager 21 reads the software distribution image management data 1060 shown in Fig. 43, and the software RM 23 applies "patch_a" to host5 (step S907).

The network RM 24 connects host5 to the network (step S908), and resumes distribution of processing by the load balancer to the server (step S909). The server RM 22 starts the server (step S910).

In this manner, because settings of software or a network corresponding to the server group to which the server is added is performed in advance for the servers in the pools, it is possible to add the server in the pools and to restore the operation of the server group in an expedited manner.

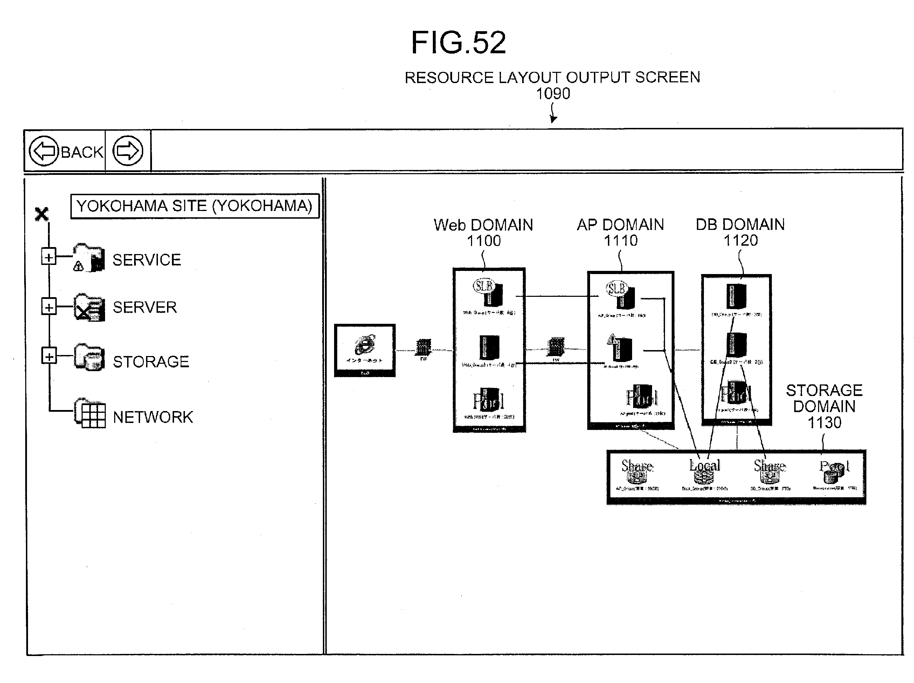

Next, various screens are explained, which are displayed on the operation management client 10 through a resource assignment management processing by the system resource manager 21. Fig. 52 is a view of an example of a resource layout output screen 1090 on which layouts of resources to be managed are displayed.

As shown in Fig. 52, the resource layout output screen 1090 is configured so that a user can view immediately how various severs that belong to a web domain 1100, an AP domain 1110, and a DB domain 1120 and the storages that belong to a storage domain 1130 are connected from one another.

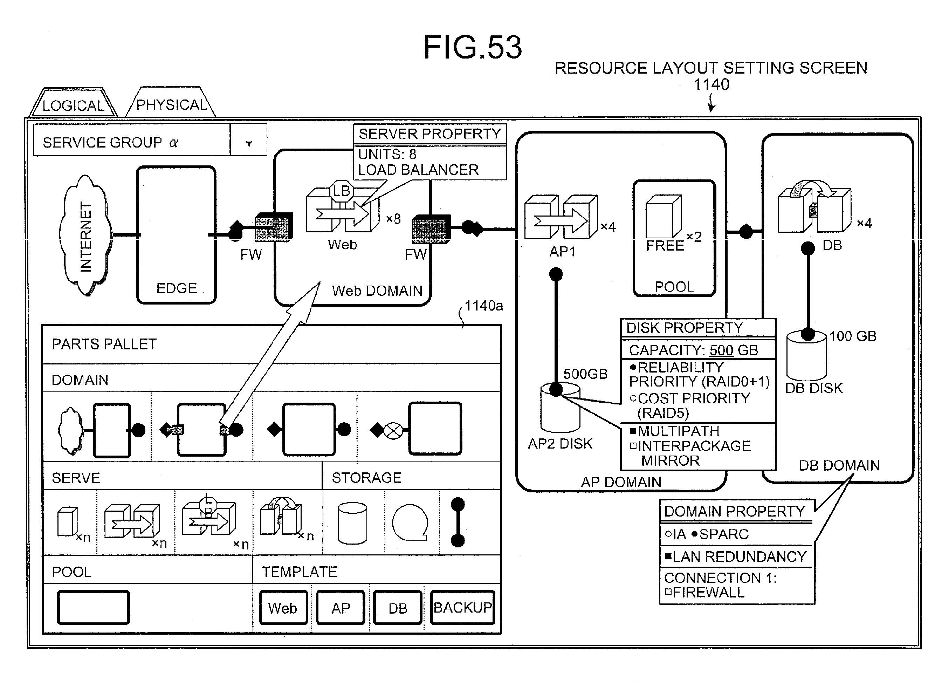

Fig. 53 is a view of an example of a resource layout setting screen 1140 to which settings on layouts of resources are input by a user. A parts pallet 1140a is displayed on the resource layout setting screen 1140 so that a layout of various resources can be determined by a user by allocating various icons on the parts pallet, such as domain, server, and storage, by operating a mouse and the like.

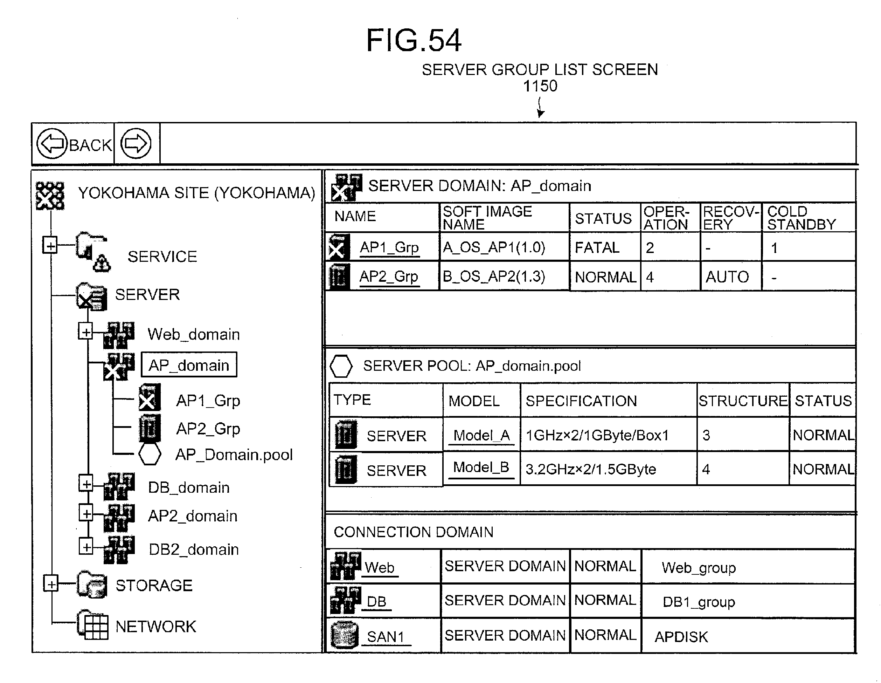

Fig. 54 is a view of an example of a server group list screen 1150 on which a list of server groups that belong to server domains are displayed. When the server domain is specified by a user by operating a mouse and the like, a list of the server groups that belong to the server domain and a list of the pooled servers capable of being added to the server group are displayed on the server group list screen 1150.

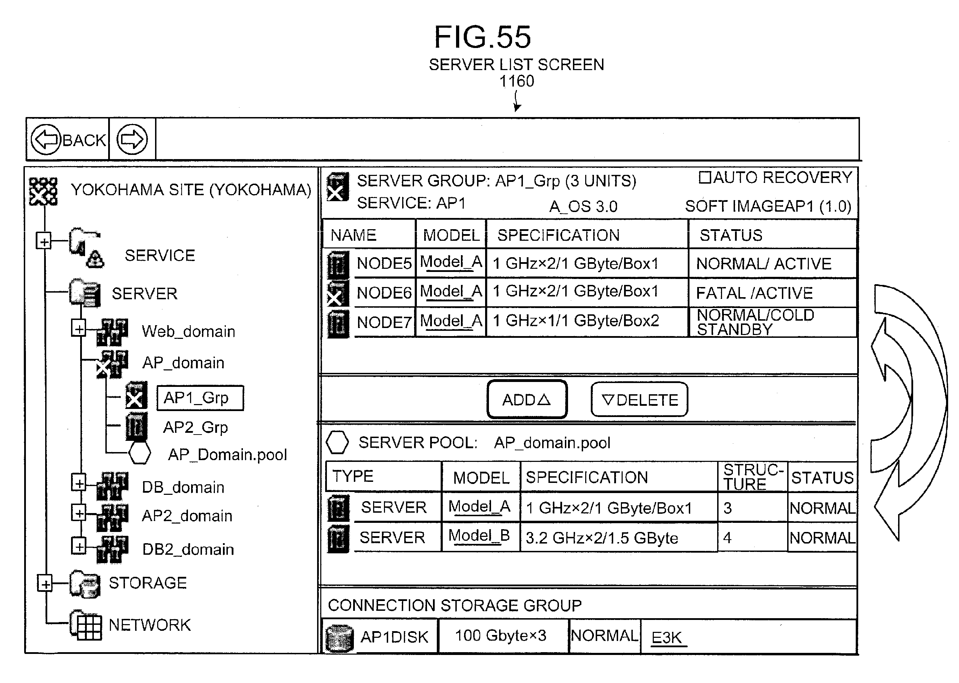

Fig. 55 is a view of an example of a server list screen 1160 on which a list of servers that belong to server groups are displayed. When the server group is specified by a user by operating a mouse and the like, a list of the servers that belong to the server group and a list of the pooled servers capable of being added to the server group are displayed on the server list screen 1160.

In addition, when the pooled server is specified on the server list screen 1160 by a user by operating a mouse and the like, and if an add button is clicked, an execution request for an processing of adding the specified server to the server group is transmitted to the system resource manager 21 and the processing of adding the server is performed.

When the server that belongs to the sever group is specified on the server list screen 1160 by a user by operating a mouse and the like, and if a delete button is clicked, a deletion request for an processing of deleting the specified server from the server group is transmitted to the system resource manager 21 and the processing of deleting the server is performed.

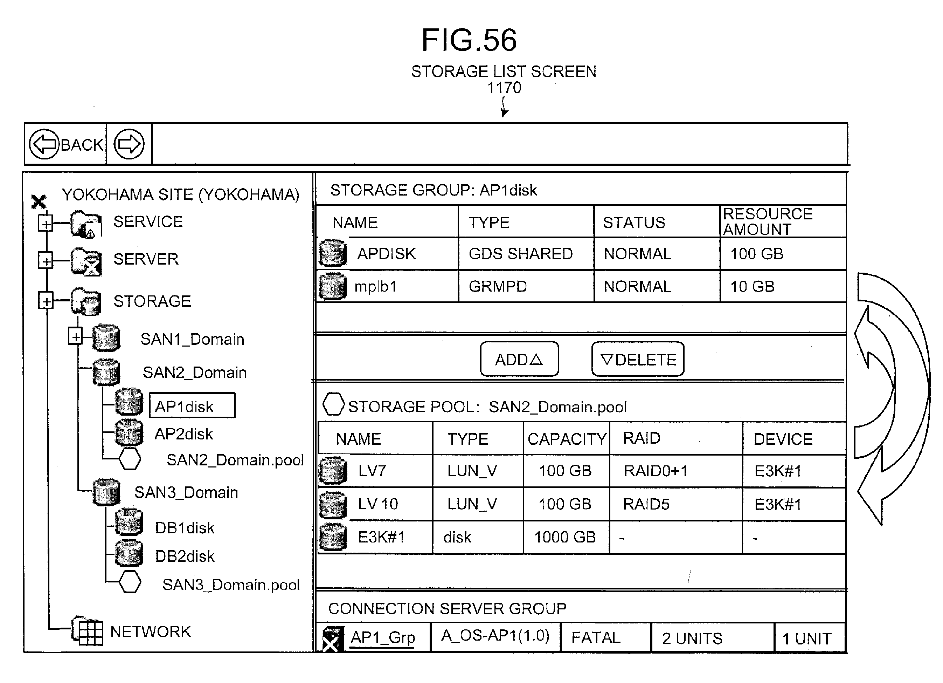

Fig. 56 is a view of an example of a storage list screen 1170 on which a list of storages that belong to storage groups are displayed. Similarly to the server list screen 1160 shown in Fig. 55, when the storage group is specified on the storage list screen 1170 by a user by operating a mouse and the like, a list of the storages that belong to the storage group and a list of the pooled storages capable of being added to the storage group are displayed on the storage list screen 1170.

When the pooled storage is specified on the storage list screen 1170 by a user by operating a mouse and the like, and if an add button is clicked, an execution request for an processing of adding the specified storage to the storage group is transmitted to the system resource manager 21 and the processing of adding the storage is performed.

When the storage that belongs to the storage group is specified on the storage list screen 1170 by a user by operating a mouse and the like, and if a delete button is clicked, a deletion request for an processing of deleting the specified storage from the storage group is transmitted to the system resource manager 21 and the processing of deleting the storage is performed.

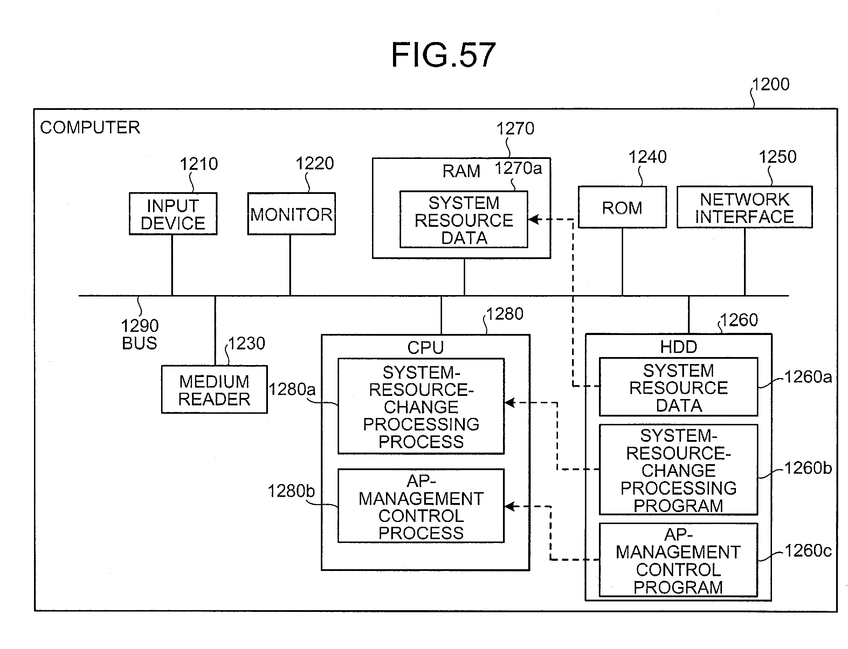

The various processings described in the above embodiment can be realized by causing a computer to execute a pre-prepared programs. An example of the computer that executes a resource-change processing program is explained below in connection with Figs. 57 to 59.

Fig. 57 is a block diagram of a hardware configuration of a computer 1200 used as the site management server 20 shown in Fig. 3. The computer 1200 is configured by connecting, via a bus 1290, an input device 1210 that receives data input from a user, a monitor 1220, a medium reader 1230 that reads out programs from a recording medium in which various programs are recorded, a ROM (read only memory) 1240, a network interface 1250 that transmits and receives data between other computers via a network, an HDD (hard disk drive) 1260, a RAM (random access memory) 1270, and a CPU (central processing unit) 1280 from one another.

The HDD 1260 stores therein programs that realize functions same as those of the site management server 20, that is, a system-resource-change processing program 1260b and an AP management control program 1260c shown in Fig. 57.

The system-resource-change processing program 1260b and the AP management control program 1260c can be integrated or be distributed for a recording as appropriate.

When the CPU 1280 reads and executes the system-resource-change processing program 1260b and the AP management control program 1260c from the HDD 1260, they work as functions of a system-resource-change processing process 1280a and an AP management control process 1280b.

The system-resource-change processing process 1280a corresponds to the system resource manager 21, the server RM 22, the software RM 23, the network RM 24, and the storage RM 25 shown in Fig. 3. The AP management control process 1280b corresponds to the AP-management control unit 27 shown in Fig. 3.

The HDD 1260 also stores therein system resource data 1260a. The system resource data 1260a corresponds to various data stored in the system resource DB 26 shown in Fig. 3.

The CPU 1280 stores therein various data related to a management of the resource as the system resource data 1260a, reads the system resource data 1260a from the HDD 1260 to store read data in the RAM 1270, and performs various data processings based on system resource data 1270a stored in the RAM 1270.

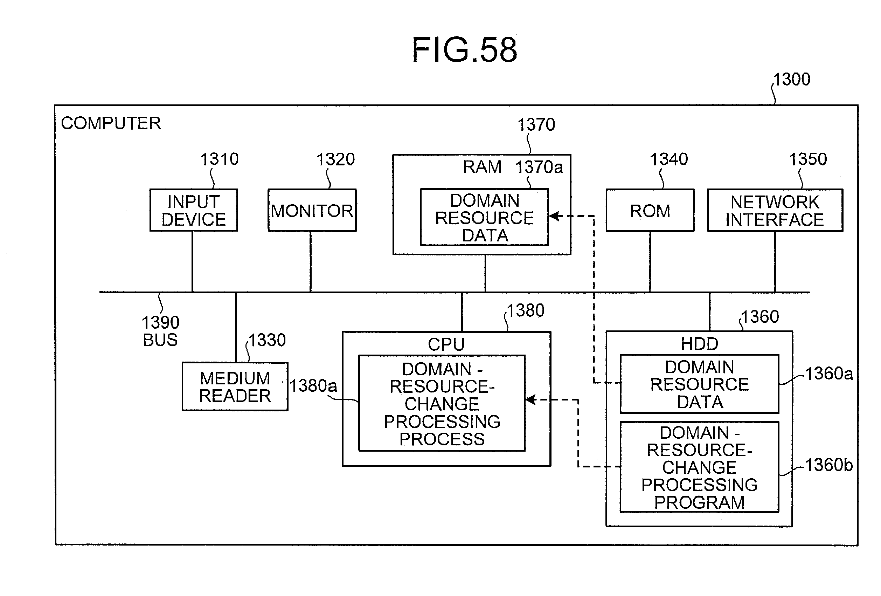

Fig. 58 is a block diagram of a hardware configuration of a computer 1300 used as the domain management server 20 shown in Fig. 3. The computer 1300 is configured by connecting, via a bus 1390, an input device 1310 that receives data input from a user, a monitor 1320, a medium reader 1330 that reads out programs from a recording medium in which various programs are recorded, a ROM 1340, a network interface 1350 that transmits and receives data between other computers via a network, an HDD 1360, a RAM 1370, and a CPU 1380 from one another.

The HDD 1360 stores therein programs that realize functions same as those of the domain management servers 50 and 60, that is, a domain-resource-change processing program 1360b shown in Fig. 57. The domain-resource-change processing program 1260b can be integrated or be distributed for a recording as appropriate.

When the CPU 1380 reads and executes the domain-resource-change processing program 1360b from the HDD 1360, it works as a function of a domain-resource-change processing process 1380a.

The domain-resource-change processing process 1380a corresponds to the system resource domain manager 51, the server sub RM 52, the software sub RM 53, and the network sub RM 54.

The HDD 1360 also stores therein domain resource data 1360a. The domain resource data 1360a corresponds to various data stored in the domain resource DB 55 shown in Fig. 55.

The CPU 1380 stores therein various data related to a management of the resource in the domain as the domain resource data 1360a, reads the domain resource data 1360a from the HDD 1360 to store read data to the RAM 1370, and performs various data processings based on the domain resource data 1370a stored in the RAM 1370.

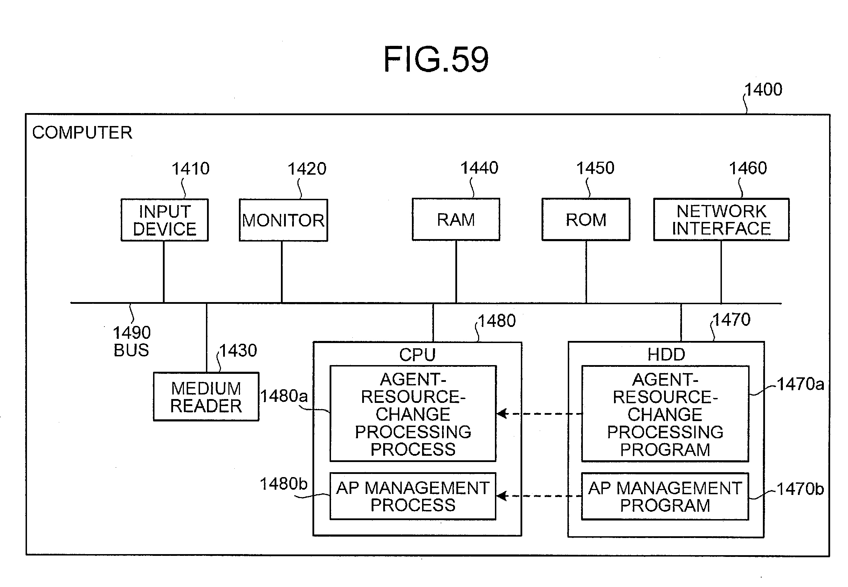

Fig. 59 is a block diagram of a hardware configuration of a computer 1400 used as the server 110a shown in Fig. 3. The computer 1400 is configured by connecting, via a bus 1490, an input device 1410 that receives a data input from a user, a monitor 1420, a medium reader 1430 that reads out programs from a recording medium in which various programs are recorded, a RAM 1440, a ROM 1450, a network interface 1460 that transmits and receives data between other computers via a network, an HDD 1470, and a CPU 1480 from one another.

The HDD 1470 stores therein programs that realize same functions as those of the server 110a, that is, an agent-resource-change processing program 1470a and an AP management program 1470b. The agent-resource-change processing program 1470a and the AP management program 1470b can be integrated or be distributed for a recording as appropriate.

When the CPU 1480 reads and executes the agent-resource-change processing program 1470a and the AP management program 1470b from the HDD 1460, they work as functions of an agent-resource-change processing process 1480a and an AP management process 1480b.

The agent-resource-change processing process 1480a corresponds to the resource manager agent 111a, the server RM agent 112a, the software RM agent 113a, the network RM agent 114a, and the storage RM agent 115a shown in Fig. 3. The AP management process 1480b corresponds to the AP managing unit 116a shown in Fig. 3.

The system-resource-change processing program 1260b, the AP management control program 1260c, the domain-resource-change processing program 1360b, the agent-resource-change processing program 1470a, and the AP management program 1470b are not necessary to be recorded in advance in the HDD 1260, the HDD 1360, or the HDD 1470.

For example, it is acceptable to store each of programs in a removable physical medium, such as a flexible disk (FD), CD-ROM, an MO disk, a DVD disk, an optical magnetic disk, or an IC card, to be inserted to the computer 1200, 1300, or 1400. It is also acceptable to store the programs in a built-in physical medium, such as an HDD installed in a computer or attached to an outside of the computer, or in other computers (or a server) connected to the computer 1200, 1300, or 1400 via a public line, the Internet, a LAN, or a WAN. In this case, it is possible for the computer 1200, 1300, or 1400 to read each of the programs and to execute the programs.

As described above, according to the embodiment, the software RM 23 and the network RM 24 perform in advance to the server in the pool, an installation or a setting of the software corresponding to the server group to which the server is added, using information in the system resource DB 26. Therefore, it is possible to restore the server group at low costs and at high processing speed by adding the server to which the settings of the software and a network are previously performed, when a failure occurs in the server included in the server group or load on the server group increases.

### INDUSTRIAL APPLICABILITY

As set forth hereinabove, a resource-change processing program and a resource-change processing method according to the present invention are suitable for an information processing system that is configured with a plurality of servers and that performs various tasks, and particularly effective for an information processing system that needs to recover a failure of a server in an expedited manner.

## Claims

1. A resource-change processing program for adding/changing a backup server in a plurality of server groups configured with a plurality of servers, the resource-change processing program causing a computer to execute:
setting processing including
acquiring setting information, which is information on a setting of a software, a network, and a storage, for a server group, and
performing a setting corresponding to the server group on the backup server in advance, based on the setting information; and
adding, when an abnormality occurs in the server group or when a load on the server group increases, the backup server for which the setting is performed at the setting processing to the server group.

2. The resource-change processing program according to claim 1, wherein
the setting processing includes
acquiring the setting information for each of the server groups, and
performing the setting on the backup server in such a manner that the setting corresponds to each of the server groups, and
the adding includes making it possible to add the backup server to any one of the server groups.

3. The resource-change processing program according to claim 1 or 2, wherein the setting processing includes
incorporating once the backup server into the server group,
performing the setting corresponding to the server group on the backup server, based on the setting information, and
disconnecting the backup server incorporated into the server group from the server group.

4. The resource-change processing program according to claim 3, wherein
the incorporating includes incorporating the backup server that is disconnected from the server group at the disconnecting into a server group into which a backup server is not incorporated from among the server groups, and
the performing the setting includes performing a setting corresponding to the server group into which the backup server is incorporated on the backup server, based on setting information of the server group into which the backup server is incorporated.

5. The resource-change processing program according to claim 1, further causing the computer to execute:
determining, when the backup server is added to the server group at the adding, whether the setting information of the server group is updated; and
resetting, when it is determined that the setting information of the server group is updated at the determining, the backup server based on updated setting information.

6. A resource-change processing method of adding/changing a backup server in a plurality of server groups configured with a plurality of servers, the resource-change processing method comprising:
setting processing including
acquiring setting information, which is information on a setting of a software, a network, and a storage, for a server group, and
performing a setting corresponding to the server group on the backup server in advance, based on the setting information; and
adding, when an abnormality occurs in the server group or when a load on the server group increases, the backup server for which the setting is performed at the setting processing to the server group.

7. The resource-change processing method according to claim 6, wherein
the setting processing includes
acquiring the setting information for each of the server groups, and
performing the setting on the backup server in such a manner that the setting corresponds to each of the server groups, and
the adding includes making it possible to add the backup server to any one of the server groups.

8. The resource-change processing method according to claim 6 or 7, wherein the setting processing includes
incorporating once the backup server into the server group,
performing the setting corresponding to the server group on the backup server, based on the setting information, and
disconnecting the backup server incorporated into the server group from the server group.

9. The resource-change processing method according to claim 8, wherein
the incorporating includes incorporating the backup server that is disconnected from the server group at the disconnecting into a server group into which a backup server is not incorporated from among the server groups, and
the performing the setting includes performing a setting corresponding to the server group into which the backup server is incorporated on the backup server, based on setting information of the server group into which the backup server is incorporated.

10. The resource-change processing method according to claim 6, further comprising:
determining, when the backup server is added to the server group at the adding, whether the setting information of the server group is updated; and
resetting, when it is determined that the setting information of the server group is updated at the determining, the backup server based on updated setting information.

11. A resource-change processing apparatus for adding/changing a backup server in a plurality of server groups configured with a plurality of servers, the resource-change processing apparatus comprising:
a setting processing unit that acquires setting information, which is information on a setting of a software, a network, and a storage, for a server group, and performs a setting corresponding to the server group on the backup server in advance, based on the setting information; and
an adding processing unit that adds, when an abnormality occurs in the server group or when a load on the server group increases, the backup server for which the setting is performed by the setting processing unit to the server group.

12. The resource-change processing apparatus according to claim 11, wherein the setting processing unit includes
an incorporating unit that incorporates once the backup server into the server group,
a setting unit that performs the setting corresponding to the server group on the backup server, based on the setting information, and
a disconnecting unit that disconnects the backup server incorporated into the server group from the server group.
